(19) Europäisches Patentamt
European Patent Office
Office européen des brevets

(11) **EP 2 559 133 B1**

(12) **FASCICULE DE BREVET EUROPEEN**

(45) Date de publication et mention
de la délivrance du brevet:
**30.05.2018 Bulletin 2018/22**

(21) Numéro de dépôt: **11722892.4**

(22) Date de dépôt: **12.04.2011**

(51) Int Cl.:
*H02M 3/158* (2006.01)    *H02M 1/00* (2006.01)
*H01M 10/44* (2006.01)    *H02J 7/00* (2006.01)
*H02J 7/34* (2006.01)

(86) Numéro de dépôt international:
**PCT/IB2011/051585**

(87) Numéro de publication internationale:
**WO 2011/128849 (20.10.2011 Gazette 2011/42)**

(54) **SYSTÈME DE GESTION D'UNE ASSOCIATION SÉRIE D'ÉLÉMENTS DE GÉNÉRATION OU DE STOCKAGE D'ÉNERGIE ÉLECTRIQUE BASÉ SUR UNE PLURALITÉ DE BRAS D'ONDULEUR DE TENSION**

SYSTEM ZUR VERWALTUNG EINER SERIENKOMBINATION AUS STROMERZEUGUNGS- ODER SPEICHERELEMENTEN AUF DER BASIS VON MEHREREN SPANNUNGSUMRICHTERHALBBRÜCKEN

SYSTEM FOR MANAGING A SERIES COMBINATION OF ELECTRICAL ENERGY GENERATION OR STORAGE ELEMENTS, BASED ON A PLURALITY OF VOLTAGE INVERTER LEGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2010 FR 1001613**

(43) Date de publication de la demande:
**20.02.2013 Bulletin 2013/08**

(73) Titulaires:
• **Institut Polytechnique de Grenoble**
  **38031 Grenoble Cedex (FR)**
• **Centre National de la Recherche Scientifique**
  **75016 Paris (FR)**

(72) Inventeurs:
• **CREBIER, Jean-Christophe**
  **38100 Grenoble (FR)**
• **CHUREAU, Alexandre**
  **F-38000 Grenoble (FR)**

(74) Mandataire: **Gevers & Orès**
**41 avenue de Friedland**
**75008 Paris (FR)**

(56) Documents cités:
**WO-A1-2008/115538    WO-A1-2009/132427**
**US-A1- 2005 017 682    US-A1- 2008 135 932**

• **TOSHIHISA SHIMIZU ET AL: "Generation Control Circuit for Photovoltaic Modules", IEEE TRANSACTIONS ON POWER ELECTRONICS, IEEE SERVICE CENTER, PISCATAWAY, NJ, US, vol. 16, no. 3, 1 mai 2001 (2001-05-01), XP011043562, ISSN: 0885-8993**
• **RAY RIDLEY: "THE NINE MOST USEFUL POWER TOPOLOGIES", INTERNET CITATION, 1 octobre 2007 (2007-10-01), pages 15-18, XP002486528, Extrait de l'Internet: URL:http://www.powersystemsdesign.com/design_tips_oct07.pdf**

**Description**

L'invention porte sur un système de gestion d'une association série d'éléments de génération et/ou de stockage d'énergie électrique, tels que des accumulateurs ou cellules d'accumulateurs électrochimiques, des supercondensateurs ou des cellules photovoltaïques. L'invention porte également sur une association série d'éléments de génération et/ou de stockage d'énergie électrique pourvue d'un tel système de gestion. Un tel système peut être utilisé pour équilibrer en tension et/ou en niveau de charge les éléments d'un système de stockage d'énergie électrique tel qu'une batterie électrochimique, ou pour équilibrer et soutenir en courant les cellules d'un panneau photovoltaïque. Toutes ces opérations - équilibrage de charge et/ou de tension, équilibrage et/ou soutien en courant, court-circuitage, ainsi que la détection de défaillances - sont désignés collectivement par le terme général de « gestion ».

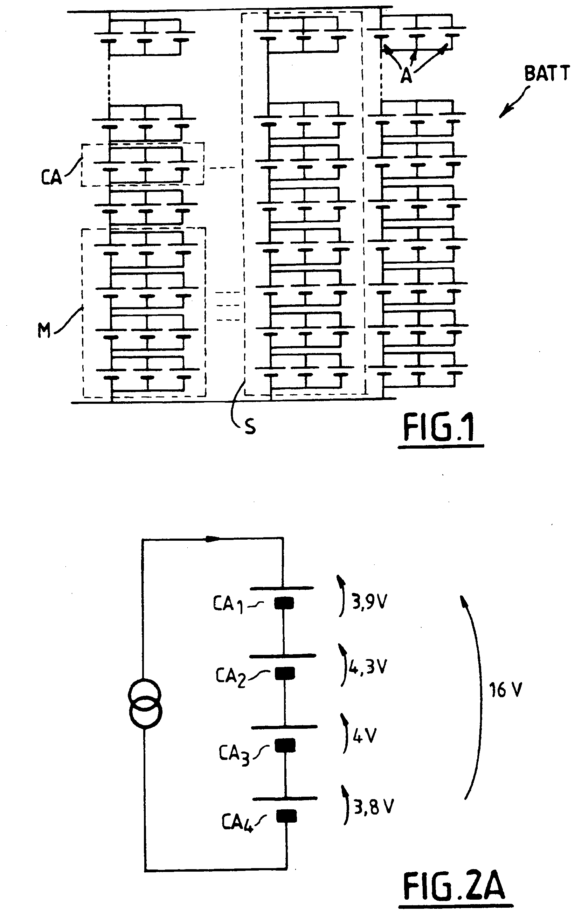

Comme le montre la figure 1, les batteries électrochimiques présentent généralement une structure modulaire. L'élément de base est constitué par un accumulateur individuel A, comprenant une cellule électrochimique unique. Plusieurs accumulateurs connectés en parallèle forment une « cellule d'accumulateurs » CA ; une telle cellule fournit une tension égale à celle d'un accumulateur individuel, mais un courant plus important. Pour élever le niveau de tension fourni par la batterie, on connecte en série plusieurs cellules d'accumulateurs, formant ce qu'on appelle un « module » M. Plusieurs modules peuvent à leur tour être connectés en série pour former ce qu'on appelle un « stack » S. Une batterie complète BATT est formée par une pluralité de stacks connectés en parallèle.

Le système de l'invention vise notamment à permettre l'équilibrage en tension et/ou en charge des différents éléments (cellules, modules) d'une batterie qui sont connectés en série entre eux.

Le document de brevet WO 2008/115538 (Hartzog et al.) décrit un dispositif pour équilibrer la charge d'un ensemble de batteries montées en série. Ce dispositif comprend un inducteur unique qui après avoir été chargé par une source de tension et déconnectée de celle-ci pour se décharger dans une pluralité de cellules.

Le problème de l'équilibrage en tension est illustré par la figure 2A qui montre une batterie formée par une association série de quatre cellules, CA1, CA2, CA3 et CA4, qui est connectée à un générateur de courant pour être chargée. Idéalement, les quatre cellules devraient être chargées à une même tension égale à 4V pour une tension globale de 16V aux bornes de la batterie. En réalité il existe des phénomènes de dispersion, liés aux conditions de fabrication, d'utilisation et de vieillissement des éléments, qui font que certains d'entre eux se chargent ou déchargent plus rapidement que d'autres. Ainsi, dans le cas de la figure 2A, les éléments CA1 et CA4 sont chargés à une tension inférieure à la valeur nominale de 4V, tandis que l'élément CA2 est chargé à une valeur sensiblement supérieure (4,3V), susceptible de l'endommager. Inversement, l'élément CA4 n'est chargé qu'à une tension de 3,8 V ; cet élément est donc susceptible d'être amené, après une utilisation prolongée, dans un état de décharge profonde - tout aussi préjudiciable - qui ne pourrait pas être détecté par la mesure de la seule tension aux bornes de l'association série. Ces problèmes sont particulièrement aigus dans le cas des batteries au lithium, qui sont très sensibles aux sous-charges et aux surcharges.

Un problème similaire se présente lors de l'association en série de cellules photovoltaïques, nécessaire pour élever le niveau de tension fourni par une cellule individuelle. Si l'une des cellules de l'association présente un défaut, ou simplement se trouve exposée à un flux lumineux moins intense que les autres (car sa surface est sale, ou elle se trouve ombragée), une différence de potentiel négative apparaît à ses bornes, ce qui limite fortement le niveau de puissance généré par l'ensemble.

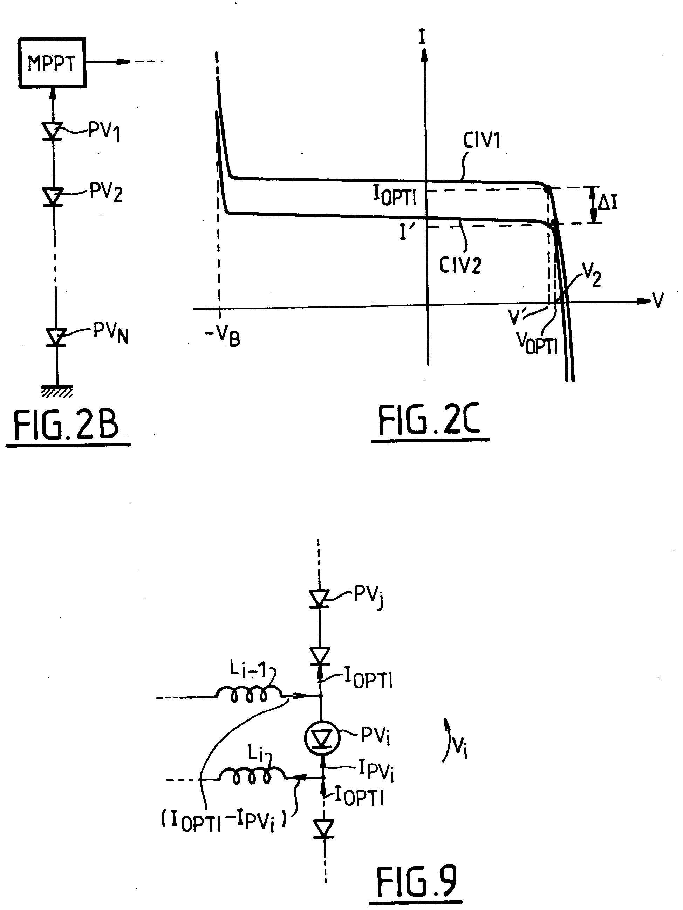

La figure 2B montre une telle association série de cellules photovoltaïques $PV_1...PV_N$, représentées par des diodes en polarisation inversée. Un module de poursuite du point de puissance maximale (MPPT, de l'anglais « maximum power-point tracker »), connecté en série aux cellules, détermine l'intensité du courant circulant dans l'association série de manière à maximiser la puissance générée par effet photovoltaïque. Sur la figure 2C, la courbe CIV1 montre la caractéristique tension (V) - courant (I) des cellules photovoltaïques exposées à un même flux lumineux ; la courbe CIV2 montre la caractéristique d'une cellule qui, à compter d'un instant T, se trouve exposée à un flux lumineux moindre, par exemple à cause d'une salissure.

Pour t<T, lorsque toutes les cellules sont éclairées de la même façon et suivent donc une même caractéristique CIV1, le module MPPT impose un courant $I_{OPTI}$ à travers l'association série, et une différence de potentiel $V_{OPTI}$ aux bornes de chaque cellule, tels que $P_{OPTI}=V_{OPTI} \cdot I_{OPTI}=max(V \cdot I)$.

A partir de l'instant t=T, l'une des cellules, $PV_i$, reçoit un flux lumineux moindre, et sa caractéristique devient celle de la courbe CIV2.

Si le courant à travers l'association série reste égal à $I_{OPTI}$, la différence de potentiel aux bornes de la cellule $PV_i$, ombragée ou sale, devient négative et égale à $-V_B$ (tension de rupture par avalanche). La perte de puissance est donc égale à $\Delta P_1=-I_{OPTI}(V_{OPTI}+V_B)$.

Le module MPTT peut réagir à cette situation en diminuant le courant au niveau $I'=I_{OPTI}-\Delta I$, de sorte que la cellule $PV_i$ redevienne productrice d'énergie. Toutefois, la puissance totale est réduite au niveau $I' \cdot [(n-1) \cdot V_2+V']$, avec une perte de puissance $\Delta P_2=P'-P_{OPTI}$, $V_2$ étant la tension aux bornes des cellules $PV_j$ ($j \neq i$) pour $I=I'$.

En tout cas, il est important de noter qu'une simple diminution d'éclairage d'une seule cellule photovoltaïque détermine une réduction sensible de la puissance générée par l'association série.

Pour pallier ces inconvénients des associations série d'éléments de génération et/ou d'accumulation d'énergie électrique - dont les accumulateurs électrochimiques et les cellules photovoltaïques ne sont que des exemples non limitatifs - il est nécessaire de prévoir des systèmes de gestion

L'état de la technique comprend plusieurs systèmes de gestion, et en particulier d'équilibrage en tension, pour des éléments de stockage, notamment électrochimique, d'énergie électrique.

Les systèmes d'équilibrage les plus communs sont de type passif, ou dissipatif. En phase de charge, ces systèmes mesurent constamment ou périodiquement la différence de potentiel aux bornes de chacun des éléments connectés en série et dérivent vers une résistance de dissipation le courant qui ne peut plus être absorbé par les éléments de moindre capacité. On comprend que ces systèmes conduisent à des pertes d'énergie difficilement acceptables ; en cas de dispersion importante des caractéristiques des différents éléments électrochimiques, la taille des dissipateurs thermiques peut devenir prohibitive. La décharge de la batterie doit être arrêtée lorsque les éléments de plus faible capacité ont atteint leur limite inférieure admissible de tension ; cela signifie que la capacité de stockage de la batterie est limitée par celle de ses plus mauvais éléments.

Il existe également des systèmes d'équilibrage actifs, qui redistribuent les courants à l'intérieur de la batterie au lieu de les dissiper. Ainsi, en phase de charge, ces systèmes dévient le courant qui ne peut plus être absorbé par les éléments « faibles » vers les éléments « forts », dont la capacité de stockage n'est pas épuisée. En phase de décharge, ils prélèvent un courant supplémentaire des éléments « forts » pour compenser le manque de courant provenant des éléments « faibles ». Les principaux inconvénients de ces systèmes sont leur complexité et leur coût élevé.

L'article de N. Kutkut et D. Divan « Dynamic equalization techniques for series battery stacks », 18th International Telecommunication Energy Conference, 1996 (INTELEC '96), pages 514 - 521, décrit plusieurs systèmes d'équilibrage actif.

Les systèmes d'équilibrage connus de l'art antérieur comprennent plusieurs éléments réactifs, en particulier des inducteurs et/ou des coupleurs magnétiques. En outre, leurs composants actifs sont difficilement intégrables, particulièrement dans les applications de haute puissance, où des dispositifs à structure verticale doivent être utilisés. Par conséquent ces systèmes sont complexes et encombrants.

Le problème de l'équilibrage ou compensation dans les associations séries de cellules photovoltaïques est connu en particulier de l'article de T. Shimizu et al. « Generation Control Circuit for Photovoltaic Modules », IEEE Transactions on Power Electronics, Vol. 16, No. 3, mai 2001. Cet article propose un premier circuit, basé sur l'utilisation d'un coupleur magnétique et réalisant un équilibrage de type centralisé. Ce circuit présente un encombrement relativement important. L'article divulgue également un deuxième circuit d'équilibrage, basé sur un hacheur multi-étages, dont la commande est relativement complexe.

L'article de T. Mishima et T. Ohnishi « Power Compensation System for Partially Shaded PV Array using Electric Double Layer Capacitors » 28th Annual Conference of the IEEE Industrial Electronics Society (IECON 02), 5-8 Nov. 2002, Vol. 4, pages 3262- 3267, divulgue un circuit d'équilibrage alternatif pour associations séries de cellules photovoltaïques, exploitant un stockage capacitif de l'énergie électrique. Ce circuit est à la fois encombrant, car il repose sur l'utilisation de plusieurs bancs de condensateurs de capacité relativement importante, et complexe à commander.

L'invention vise à remédier aux inconvénients précités de l'art antérieur en procurant un système de gestion présentant une structure simple, dont le pilotage est aisé, les composants actifs sont facilement intégrables et les composants inductifs sont compacts. L'invention est définie par les caractéristiques de la revendication indépendantes. Les modes de réalisations préférés sont définis par les revendications dépendantes. Un objet de l'invention, permettant d'atteindre ce but, est un système de gestion d'une association série d'éléments de génération et/ou de stockage d'énergie électrique, le système comportant :

- une première et une deuxième barre de puissance ;
- une pluralité de bras d'onduleur connectés en parallèle entre ladite première et ladite deuxième barre de puissance, chaque bras d'onduleur étant à son tour constitué par deux interrupteurs connectés en série par l'intermédiaire d'un point dit point milieu du bras ;
- une pluralité de connecteurs formant des liaisons pour relier le point milieu de chaque bras d'onduleur à ladite association série, entre deux éléments adjacents distincts pour les chaque points milieu, à travers un inducteur respectif ; et
- une pluralité d'inducteurs ($L_0$-$L_n$) au travers desquels lesdites liaisons sont respectivement réalisées.

Selon un premier mode de réalisation de l'invention, le système peut comporter également un premier connecteur pour relier la première barre de puissance à une borne positive de l'élément de génération et/ou de stockage d'énergie électrique situé à une extrémité positive de ladite association série, et un deuxième connecteur pour relier la deuxième barre de puissance à une borne négative de l'élément de génération et/ou de stockage d'énergie électrique situé à une extrémité négative de ladite association série. Dans ce cas, le nombre de bras d'onduleur et d'inducteurs est n-1, n étant le nombre d'éléments de génération et/ou de stockage d'énergie à équilibrer.

Selon un deuxième mode de réalisation de l'invention, le système peut comporter également deux inducteurs connectés en série auxdits premier et deuxième connecteurs. Le nombre d'inducteurs est donc égal à n+1, tandis que celui de bras d'onduleurs reste égal à n-1. Les performances d'un tel système sont meilleures que celles du premier mode de réalisation ; en particulier, les oscillations de courant à l'intérieur des éléments de génération et/ou de stockage sont nettement moins importantes.

Selon un troisième mode de réalisation de l'invention, le système peut comporter également : un bras d'onduleur connecté entre ladite première et ladite deuxième barres de puissance, dont le point milieu est relié par l'intermédiaire d'un inducteur respectif à une borne positive de l'élément de génération et/ou de stockage d'énergie électrique situé à une extrémité positive de ladite association série ; et un bras d'onduleur connecté entre ladite première et ladite deuxième barre de puissance, dont le point milieu est relié par l'intermédiaire d'un inducteur respectif à une borne négative de l'élément de génération et/ou de stockage d'énergie électrique situé à une extrémité négative de ladite association série. L'intérêt principal de ce mode de réalisation est de permettre un équilibrage « forcé » des éléments.

Selon des caractéristiques avantageuses de l'invention

- Lesdits inducteurs peuvent présenter tous une même valeur d'inductance.
- Plus particulièrement, lesdits inducteurs peuvent être réalisés sous la forme de bobinages autour de colonnes respectives d'un noyau magnétique à culasses mutualisées, réalisant ainsi un circuit magnétique unique. Cela permet de rassembler tous les composants inductifs du système dans un seul élément particulièrement compact.
- Le système peut comporter également un condensateur connecté entre lesdites première et deuxième barres de puissance.
- Le système peut comporter également un moyen de commande pour piloter de manière alternée les interrupteurs de tous ou d'une partie desdits bras d'onduleur, avec un rapport cyclique choisi de manière à déterminer un niveau de tension moyen du point milieu de chacun desdits bras d'onduleur égal à un niveau de tension nominal prédéterminé.
- En variante, le système peut comporter un moyen de commande pour piloter de manière alternée les interrupteurs de tous ou d'une partie desdits bras d'onduleur, avec un rapport cyclique choisi de manière à déterminer un niveau de courant traversant le point milieu de chacun desdits bras d'onduleur égal à un niveau de courant nominal prédéterminé.
- En ce qui concerne les composants actifs du système : les interrupteurs desdits bras d'onduleur peuvent être réalisés sous la forme de dispositifs semi-conducteurs à structure verticale ; et au moins une pluralité desdits bras d'onduleur sont réalisés sous la forme de modules bi-puces comportant une première puce intégrant de manière monolithique les interrupteurs connectés entre la première barre de puissance et les points milieux respectifs, et une deuxième puce intégrant de manière monolithique les interrupteurs connectés entre lesdits points milieux respectifs et la deuxième barre de puissance. Ainsi, tous lesdits composants actifs peuvent être réalisés de manière intégrée, même lorsque les niveaux de puissance et de tension en jeu nécessitent l'utilisation de dispositifs à structure verticale. Lorsque des dispositifs à structure latérale peuvent être utilisés, la partie active du système de l'invention peut être intégrée de manière monolithique sans difficultés particulières.

- Lesdits bras d'onduleurs peuvent être réalisés en technologie MOS complémentaire, ou CMOS ou à base de transistors type N (MOS, IGBT ou diodes).
- N dits bras d'onduleur, avec N>1, peuvent être reliés par leurs points milieux respectifs, et par l'intermédiaire d'inducteurs respectifs, à chacun desdits connecteurs. Dans ce cas, le système peut comprendre également un moyen de commande pour piloter de manière périodique les bras d'onduleurs connectés à un même conducteur avec un décalage de $1/N^{\text{ème}}$ de cycle. Avantageusement, N peut être égal au nombre d'éléments de stockage ou de génération d'énergie électrique de ladite association série.

D'autres objets de l'invention sont :

- Un système hiérarchisé de gestion d'une association série de modules de stockage ou de génération d'énergie électrique, chaque module étant à son tour constitué d'une association série d'éléments de stockage ou de génération d'énergie électrique, ledit système comprenant : une pluralité de systèmes de gestion tels que décrits ci-dessus, pour assurer la gestion de modules respectifs ; et un système de gestion basé sur des convertisseurs de type flyback, pour assurer la gestion de l'association série desdits modules, considérés comme des unités indivisibles. Avantageusement, ledit système de gestion basé sur des convertisseurs de type flyback peut comprendre : une pluralité d'onduleurs en pont complet, chacun desquels est constitué par deux bras d'onduleur connectés en parallèle entre deux ports d'extrémité de l'onduleur, chaque bras d'onduleur étant à son tour constitué par deux interrupteurs connectés en série par un point dit point milieu du bras; une pluralité de connecteurs pour connecter les deux ports d'extrémité de chaque onduleur en pont complet à un élément respectif de ladite association série; et un coupleur magnétique formé par un noyau magnétique sur lequel est réalisée une pluralité d'enroulements chacun desdits enroulements étant relié aux points milieux des bras de l'un desdits onduleurs.
- Une association série d'éléments de stockage électrochimique d'énergie électrique comportant un système de gestion tel que décrit ci-dessus.

- L'utilisation d'un système de gestion tel que décrit ci-dessus pour réaliser un équilibrage en tension et/ou en niveau de charge des éléments d'une batterie électrochimique.

Un panneau photovoltaïque peut comporter une association série de cellules photovoltaïques, connectée à un système de gestion tel que décrit ci-dessus.

- L'utilisation d'un système tel que décrit ci-dessus pour équilibrer en courant une association série de cellules ou de panneaux photovoltaïques.
- L'utilisation d'un système tel que décrit ci-dessus pour détecter une cellule photovoltaïque, ou un ensemble de cellules photovoltaïques, défaillantes ou ombragées dans une association série de telles cellules.

Un ensemble de panneaux photovoltaïques peut être connecté à un système de gestion tel que décrit ci-dessus.

D'autres caractéristiques, détails et avantages de l'invention ressortiront à la lecture de la description faite en référence aux dessins annexés donnés à titre d'exemple, dans lesquels:

- la figure 1 montre la structure modulaire d'une batterie électrochimique ;
- la figure 2A illustre le problème de l'équilibrage de tension dans une association série d'éléments de stockage électrochimique d'énergie ;
- les figures 2B et 2C illustrent la nécessité d'un équilibrage dans une association série de cellules photovoltaïques ;
- la figure 3A montre la structure d'un système d'équilibrage selon ledit premier mode de réalisation de l'invention ;
- les figures 3B à 3D illustrent le fonctionnement du système de la figure 3A pour équilibrer en tension l'association série d'éléments de stockage d'énergie de la figure 2A ;
- la figure 4A montre la structure d'un système de gestion selon ledit deuxième mode de réalisation de l'invention ;
- les figures 4B à 4D illustrent le fonctionnement du système de la figure 4A pour équilibrer en tension l'association série d'éléments de stockage d'énergie de la figure 2A ;
- la figure 5 montre la structure d'un système de gestion selon ledit troisième mode de réalisation de l'invention ;
- la figure 6 illustre la réalisation des inducteurs d'un système de gestion selon l'invention en utilisant un noyau magnétique à culasses mutualisées ;
- les figures 7A et 7B illustrent la réalisation intégrée de la partie active d'un système de gestion selon l'invention, dans une application à haute tension et haute puissance nécessitant l'utilisation de composants à structure verticale ;

- les figures 8A et 8B montrent les schémas électriques de deux variantes d'un bras d'onduleur de tension réalisé en technologie MOS complémentaire ;
- la figure 9 illustre le fonctionnement d'un système selon l'invention pour équilibrer une association série de cellules photovoltaïques ;
- les figures 10A - 10C illustrent le fonctionnement d'un système selon l'invention pour équilibrer une association série de panneaux photovoltaïques ;
- les figures 11A et 11B illustrent deux modes de réalisation alternatifs d'un système selon l'invention, permettant une réduction de la taille des composants réactifs ;
- la figure 11C illustre des signaux de commande d'interrupteurs de systèmes de gestion selon les modes de réalisation des figures 11A et 11B ;
- la figure 12 illustre l'architecture d'un système de gestion de type hiérarchisé ; et
- la figure 13 montre le schéma électrique d'un équilibreur « flyback » utilisé dans le système hiérarchisé de la figure 12.

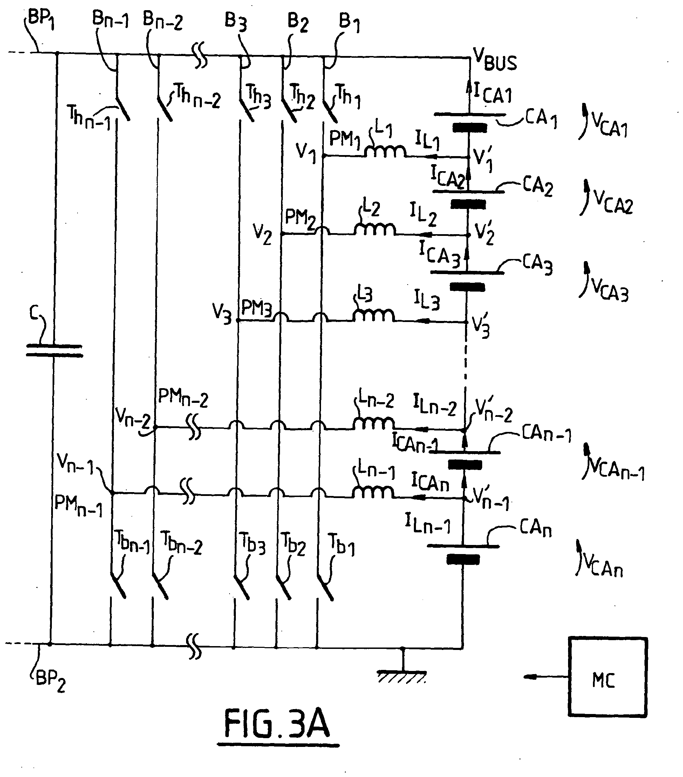

La figure 3A montre la structure d'un système de gestion selon un premier mode de réalisation de l'invention, le plus simple. Ce système permet l'équilibrage en tension d'une batterie constituée par l'association en série de n éléments (accumulateurs ou cellules d'accumulateurs) $CA_1 ... CA_n$; le pôle positif de la batterie est connecté à une première barre de puissance $BP_1$, son pôle négatif à une deuxième barre de puissance $BP_2$ qui est à son tour reliée à la terre. Les tensions aux bornes des éléments $CA_1 ... CA_n$ sont indiquées par $V_{CA1} ... V_{CAn}$. Comme expliqué en référence à la figure 2A, en l'absence d'équilibrage ces tensions ne sont pas nécessairement égales entre elles. La différence de potentiel entre la première et la deuxième barre de puissance vaut $V_{BUS} = V_{CA1} + ... + V_{CAn}$.

Le système de gestion proprement dit comprend (n-1) bras d'onduleurs parallèles $B_1 ... B_{n-1}$, connectés entre la première et la deuxième barre de puissance. Chaque bras d'onduleur $B_i$ comprend deux interrupteurs : un interrupteur « haut » $T_{hi}$ relié à la première barre et un interrupteur « bas » $T_{bi}$ relié à la deuxième barre. Entre les deux interrupteurs se trouve un point milieu $PM_i$.

Le point milieu $PM_i$ de bras $B_i$ est connecté à un point de la batterie situé entre la borne négative de l'élément $CA_i$ et la borne positive de l'élément $CA_{i+1}$ par l'intermédiaire d'un inducteur $L_i$ respectif, ainsi que de connecteurs non représentés sur les figures. On indique par $V'_i$ le potentiel de ce point : on a évidemment $V'_i = V_{CAn} + V_{CA(n-1)} + ... + V_{CA(i+1)}$. Si les tensions $V_{CA}$ étaient égales entre elles (batterie parfaitement équilibrée) on

aurait : $V_i' = \dfrac{n-i}{n} V_{BUS}$ .

Un moyen de commande MC (par exemple un microprocesseur) pilote les interrupteurs des bras d'onduleur de manière alternée, c'est à dire en assurant que les deux interrupteurs $T_h$ et $T_b$ d'un même bras ne soient jamais fermés en même temps, sous peine de court-circuiter la batterie et les deux barres de puissance, ce qui pourrait conduire à la destruction du système.

La tension moyenne $V_i$ du point milieu $PM_i$ du bras d'onduleur $B_i$ dépend du rapport cyclique de fermeture des deux interrupteurs $T_{hi}$ et $T_{bi}$. Soit $\alpha_i$ le rapport cyclique de l'interrupteur $T_{hi}$ (c'est à dire que cet interrupteur est fermé pendant une fraction $\alpha_i$, avec $0 \leq \alpha_i \leq 1$, du temps) et $(1-\alpha_i)$ le rapport cyclique de l'interrupteur $T_{bi}$; il est facile de vérifier que la tension $V_i$ du point moyen $PM_i$ vaut $V_i = \alpha_i \cdot V_{BUS}$ (on assume que la tension de la première barre de puissance vaut $V_{BUS}$ et celle de la deuxième barre de puissance vaut 0 Volts).

On pose $\alpha_i = \dfrac{n-i}{n}$, de telle sorte que

$V_i = \dfrac{n-i}{n} V_{BUS}$ . Ainsi, chaque point milieu du système se trouve à un niveau de tension égal à celui qu'aurait le point de la batterie auquel il est relié par l'intermédiaire de l'inducteur $L_i$ si ladite batterie était parfaitement équilibrée. Bien entendu, de préférence le rapport cyclique des bras d'onduleur sera commandé en boucle fermée, réalisant un asservissement en tension ou en courant dans l'inducteur, ce qui nécessite l'utilisation de capteurs de tension en parallèle aux éléments $CA_i$ et/ou de courant en série avec l'inducteur.

On considère, à titre d'exemple, une association série de 7 éléments (cellules ou modules) $CA_1$ à $CA_7$. La tension $V_{BUS}=21V$, ce qui implique une tension nominale aux bornes de chaque élément égale à 3 V. Mais les éléments ne sont pas équilibrées : $V_{CA3}=3,6$ V tandis que $V_{CAi}=2,9$ V pour i=1, 2, 4 - 7.

Les tensions $V_i$, $V'_i$ et les différences de potentiel $V_i$-$V'_i$ aux bornes des inducteurs $L_i$ sont indiquées dans le tableau suivant :

| $V_1$=18 V | $V'_1$=18,1 V | $V_1$-$V'_1$= 0,1 |
|---|---|---|
| $V_2$=15 V | $V'_2$=15,2 V | $V_2$-$V'_2$= 0,2 |
| $V_3$=12 V | $V'_3$=11,6 V | $V_3$-$V'_3$= - 0,4 |
| $V_4$=9 V | $V'_4$=8,7 V | $V_4$-$V'_4$= - 0,3 |
| $V_5$=6 V | $V'_5$=5,8 V | $V_5$-$V'_5$= - 0,2 |
| $V_6$=3 V | $V'_6$=2,9 V | $V_6$-$V'_6$= - 0,1 |

Comme on peut le constater, il existe une différence de tension aux bornes de chaque inducteur $L_i$; par conséquent les courants $L_i$ qui traversent lesdits inducteurs varient linéairement dans le temps. Si on prend comme positif le sens d'un courant circulant des éléments de batterie vers le système de gestion, on peut voir que les courants $I_{L1}$ et $I_{L2}$ augmentent, tandis que $I_{L3}$ - $I_{L6}$ diminuent. Ainsi :

- L'élément $CA_1$ tend à être chargé par le courant $I_{L1}$;
- L'élément $CA_2$ tend à être chargé par le courant $I_{L2}$ et déchargé par $I_{L1}$ ; toutefois, comme $(V_2$-$V'_2)> (V_1$-$V'_1)$, $I_{L2}$ croit plus rapidement que $I_{L1}$ : globalement, $CA_2$ est donc chargé ;
- L'élément $CA_3$ tend à être déchargé tant par $I_{L2}$ (qui est positif) que par $I_{L3}$, qui est négatif.
- L'élément $CA_4$ tend à être chargé par $I_{L3}$ mais déchargé par $I_{L4}$; toutefois, comme $|V_3$-$V'_3|> |V_4$-$V'_4|$, l'effet de chargement prévaut et $CA_4$ tend à se charger ;
- L'élément $CA_5$ tend à être chargé par $I_{L4}$ et déchargé par $I_{L5}$ encore une fois, l'effet de chargement prévaut ;
- L'élément $CA_6$ tend à être chargé par $I_{L5}$ et déchargé par $I_{L6}$ ; encore une fois, l'effet de chargement prévaut ;
- L'élément $CA_7$ tend à être chargé par $I_{L6}$.

En conclusion, l'élément surchargé $CA_3$ tend à se décharger, tandis que les autres éléments, sous-chargés, se chargent à ses dépens. Globalement, il se produit un équilibrage de la batterie.

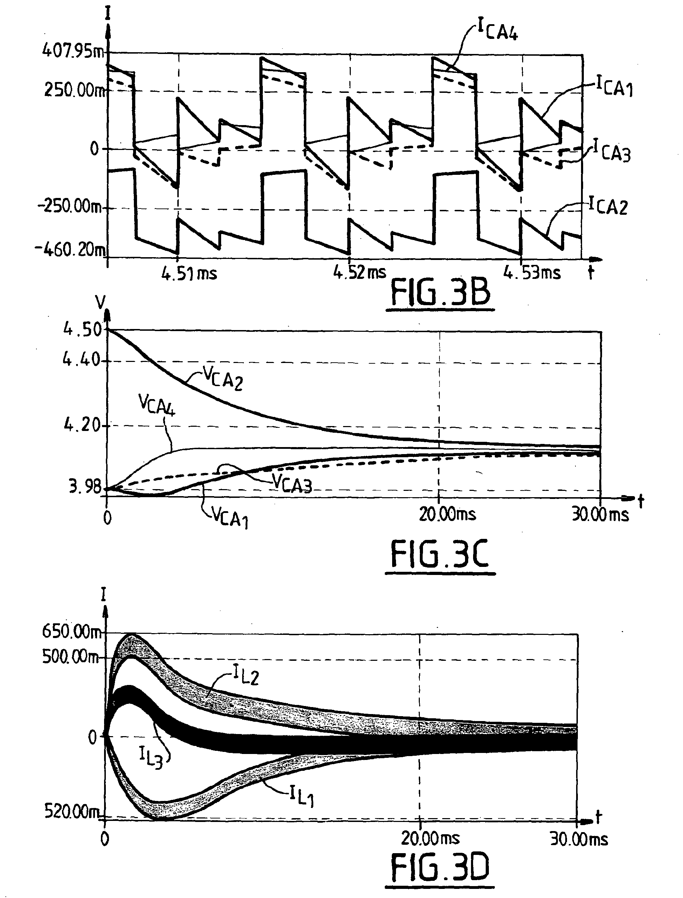

Les figures 3B - 3D montrent les résultats d'une simulation conduite pour une batterie comprenant 4 éléments dans laquelle l'élément $CA_2$ est chargé à 4,5V tandis que les trois autres éléments $CA_1$, $CA_3$ et $CA_4$ le sont à 4 V.

La figure 3B montre la variation dans le temps des courants $I_{CAi}$ qui parcourent les éléments. On peut remarquer que ces courants sont très découpés, avec des variations brusques qui correspondent aux commutations des interrupteurs, et des croissances ou décroissances linéaires entre lesdites commutations. Dans l'exemple considéré ici, les ordres de commutation des différents interrupteurs sont en phase. Cela n'est cependant pas nécessaire. Au contraire, il peut être avantageux de piloter les différents bras d'onduleur de telle manière que leurs commutations ne soient pas simultanées : en effet, cela permet de réduire l'amplitude des oscillations de tension et de réduire la capacité du condensateur de filtrage C.

La figure 3C montre l'évolution des tensions $V_{CAi}$ aux bornes des éléments de la batterie. On peut voir que ces tensions convergent vers une valeur commune, c'est à dire qu'il se produit un équilibrage. On peut voir cependant que la tension $V_{CA1}$ commence par diminuer légèrement avant de remonter vers ladite valeur commune.

La figure 3D montre un graphique des courants $I_{L1}$- $I_{L3}$ en fonction du temps. On peut remarquer les oscillations à haute fréquence, provoquées par les commutations des interrupteurs, superposées à une évolution plus lente et filtrées seulement en partie par les inducteurs.

Le condensateur C filtre les fluctuations de tension dues aux commutations.

Dans un prototype réalisé en technologie CMOS, un tel système de gestion présente une consommation de l'ordre de 1 mW en l'absence de déséquilibre entre les éléments de batterie. La consommation augmente lorsqu'un déséquilibre doit être compensé, mais l'efficacité d'équilibrage (rapport entre l'énergie transférée lors de l'équilibrage et la somme entre cette énergie et l'énergie consommée par le système) est typiquement supérieure à 90%.

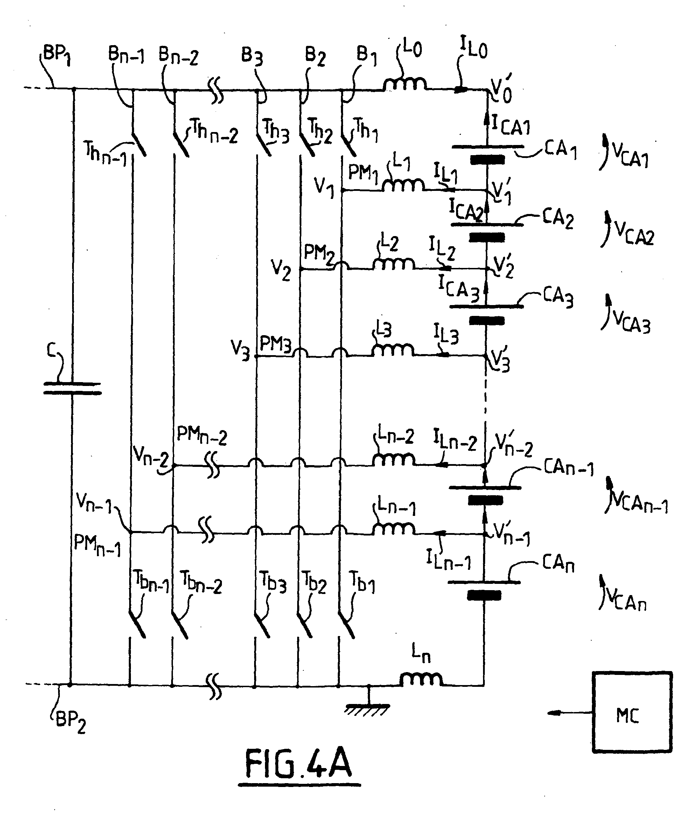

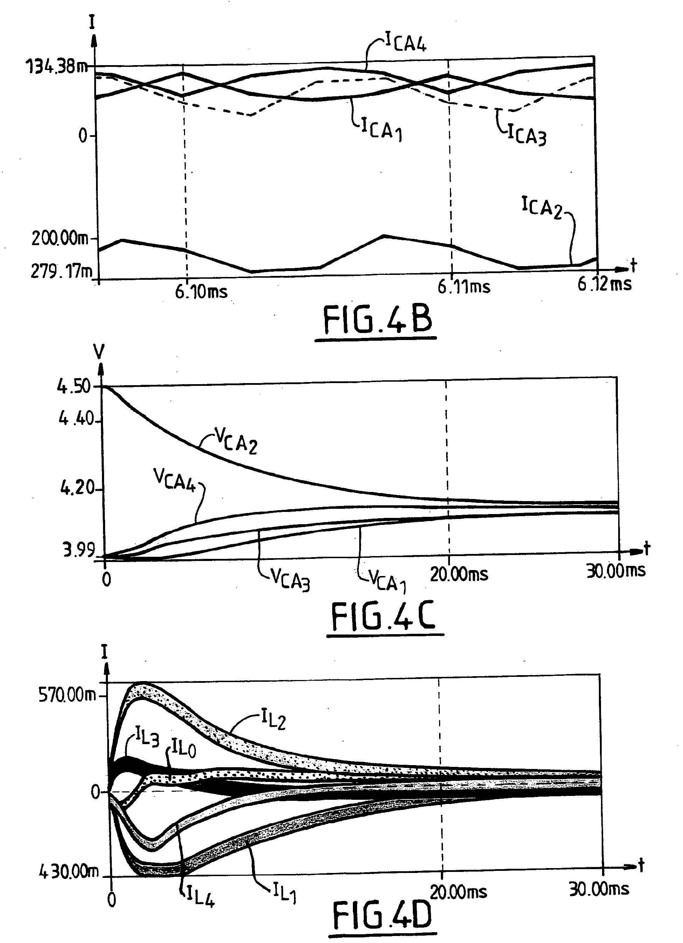

La figure 4A montre le schéma d'un système selon un deuxième mode de réalisation de l'invention. Ce système se différencie de celui de la figure 3A seulement en ce qu'il comporte deux inducteurs additionnels, $L_0$ et $L_n$, connectés respectivement entre la borne positive de l'élément $CA_1$ et la première barre de puissance $BP_1$ et entre la borne négative l'élément $CA_n$ et la deuxième barre de puissance $BP_2$. L'introduction de ces inducteurs supplémentaires ne change pas fondamentalement le fonctionnement du système, mais a néanmoins des effets avantageux, illustrés par les figures 4B - 4D. Ces figures se rapportant à une simulation effectuée dans les mêmes conditions que celle des figures 3B - 3D, à savoir pour une batterie comprenant 4 éléments dans laquelle l'élément $CA_2$ est chargé à 4,5V tandis que les trois autres éléments $CA_1$, $CA_3$ et $CA_4$ le sont à 4 V.

La figure 4B montre que les courants $I_{CAi}$ qui parcourent les éléments sont nettement moins découpés que dans le cas précédent ; en particulier les variations brusques qui correspondent aux commutations des interrupteurs sont absentes. Cela n'est pas surprenant : dans le circuit de la figure 4A, tous les courants doivent traverser des inducteurs : par conséquent, ils ne peuvent pas présenter de variations brusques. Un tel comportement est nettement meilleur du point de vue de la compatibilité électromagnétique, et évite d'imposer aux éléments un stress qui pourrait être insupportable ou encore de générer des pertes plus importantes.

Un autre avantage de la topologie de la figure 4A est que la somme des courants qui traversent les inducteurs $L_0$ à $L_n$ est nulle à tout instant: $\sum_{i=0}^{n} I_{Li} = 0$.

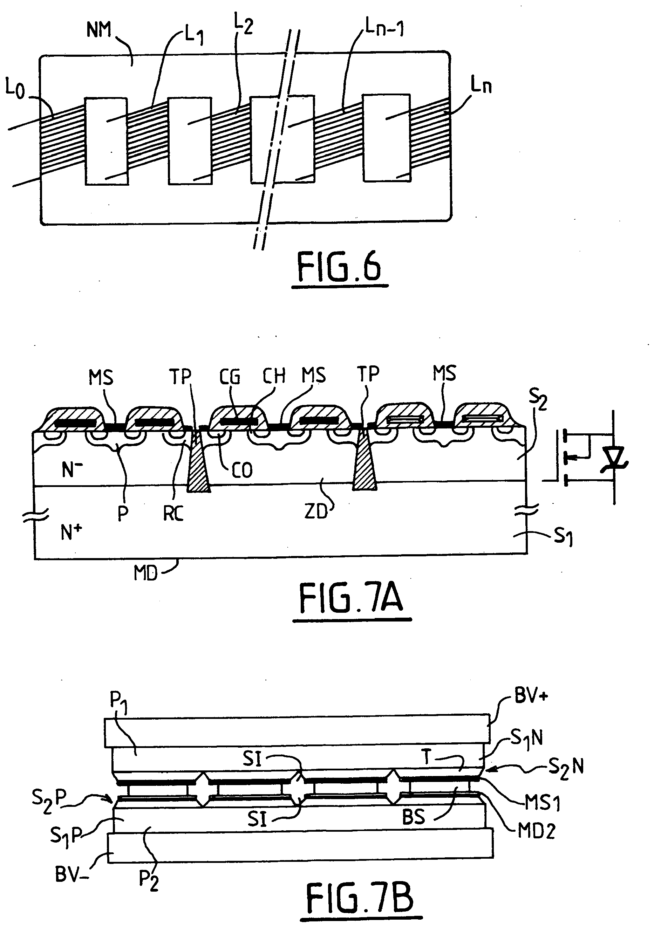

Cela permet de réaliser les n+1 inducteurs sous la forme d'enroulements sur des colonnes indépendantes d'un noyau magnétique CM à culasses mutualisées, réalisant un circuit magnétique unique. Il en résulte un agencement très compact des composants inductifs du système, comme illustré sur la figure 6.

Un noyau magnétique à culasses mutualisées peut également être utilisé pour le système de la figure 3A. Cependant, dans ce cas la relation $\sum_{i=1}^{n-1} I_{Li} = 0$ n'est pas satisfaite ; par conséquent il faut prévoir une « jambe » ou « colonne » de retour, sans enroulement, pour permettre le bouclage des lignes de flux. Afin d'éviter tout risque de saturation du noyau magnétique, la section de cette jambe de retour devrait, idéalement, être égale à la somme des sections de toutes les autres jambes (associées à un enroulement respectif), ce qui conduirait à un doublement de la masse du noyau. L'intérêt du deuxième mode de réalisation de l'invention est donc manifeste.

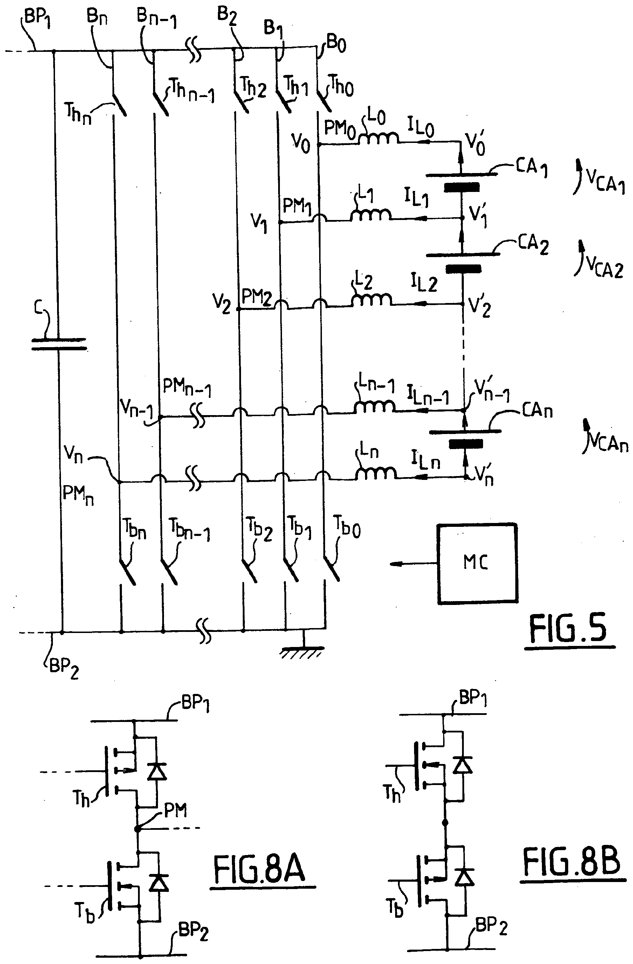

Le troisième mode de réalisation du système de l'invention, illustré sur la figure 5, constitue une évolution de celui de la figure 4A. Il s'en différencie en ce que les inducteurs $L_0$ et $L_n$ ne sont pas connectés directement à la première et à la deuxième barre de puissance, mais aux points milieux $PM_0$, $PM_n$ de deux bras d'onduleur additionnels.

Cela permet de maintenir la première barre de puissance à un potentiel supérieur à celui aux bornes de la batterie ; dans ce cas, le condensateur C n'a plus seulement une fonction de filtrage : il est nécessaire pour maintenir constante la différence de potentiel entre les deux barres de puissance.

Surtout, cette variante permet de réaliser un équilibrage « forcé » des éléments.

Le mode de fonctionnement décrit plus haut peut être qualifié d'équilibrage « naturel » : le module de commande MC n'a pas à connaître les tensions aux bornes des différents éléments de la batterie ; il pilote les interrupteurs d'une manière prédéfinie, et cela suffit à produire un équilibrage quel que soit l'état de charge desdits éléments. Dans un équilibrage forcé, en revanche, le système agit spécifiquement sur les éléments surchargés, pour les décharger partiellement, et sur les éléments sous-chargés, pour élever leur niveau de charge.

Le mode de fonctionnement en équilibrage forcé peut être expliqué à l'aide d'un exemple. On considère que l'élément $CA_2$ est surchargé, tandis que l'élément $CA_n$ est insuffisamment chargé (se référer à la figure 5).

D'une part, on pilote les interrupteurs des bras $B_1$ et $B_2$ exactement comme en mode d'équilibrage naturel, alors que les autres interrupteurs restent ouverts. Comme expliqué plus haut, les courants $I_{L1}$ et $I_{L2}$ tendent à décharger $CA_2$; mais contrairement à ce qui se passe en équilibrage naturel, l'énergie extraite de $CA_2$ ne peut pas être absorbée par les autres éléments, qui ne sont pas directement connectés au système (car les interrupteurs des bras d'onduleur correspondants sont bloqués en position ouverte). Cette énergie est donc stockée par le condensateur C, ce qui entraîne une légère augmentation de la tension de la première barre de puissance, qui n'est donc plus égale à la tension aux bornes de la batterie.

D'autre part, et simultanément, on pilote les in-

terrupteurs des bras $B_{n-1}$ et $B_n$ exactement comme en mode d'équilibrage naturel, alors que les autres interrupteurs restent ouverts. Les courants $I_{L(n-1)}$ et $I_{Ln}$ tendent à charger $CA_n$, en déstockant de l'énergie du condensateur C. En général, ce condensateur devra présenter une capacité plus élevée que dans les autres modes de réalisation, où il n'a qu'une fonction de filtrage.

Dans un autre exemple, il est possible d'utiliser l'équilibrage actif pour décharger la cellule $CA_2$ au bénéfice de toutes les autres cellules $CA_i$ ($i \neq 2$). Seuls les bras d'onduleur $B_0$, $B_1$, $B_2$ et $B_n$ sont pilotés, de manière à induire la circulation de courants uniquement dans les inducteurs $L_0$, $L_1$, $L_2$, et $L_n$. Les bras d'onduleur sont asservis en courant de telle manière que le courant dans Lo vaut une unité de valeur positive (le courant rentre dans $CA_1$), le courant dans $L_1$ vaut n unités de valeur négative, celui dans $L_2$ vaut n unités de valeur positive et celui dans $L_n$ vaut une unité de valeur négative. Tous les autres interrupteurs sont ouverts, et aucun courant ne circule dans les inducteurs correspondants. Il est possible de montrer que, dans cette configuration, tous les éléments $CA_i$ ($i \neq 2$) se chargent aux dépens du seul élément $CA_2$.

L'équilibrage actif minimise la consommation du système, car seuls les interrupteurs effectivement nécessaires à l'équilibrage commutent. En outre, il permet de contrôler l'intensité du transfert de charge, alors que l'équilibrage naturel peut conduire à des transitoires de courant très intenses, ce qui impose le recours à des limiteurs de courant ou à un surdimensionnement des composants du système d'équilibrage.

En revanche, l'équilibrage actif ou forcé nécessite un pilotage plus sophistiqué ; surtout, il est nécessaire de prévoir un ensemble de capteurs de courant et/ou de tension, au niveau des interrupteurs ou de chaque connexion entre un inducteur et le point milieu du bras d'onduleur correspondant. En effet, alors qu'en équilibrage naturel les bras d'onduleur peuvent être asservis en tension avec éventuellement une limitation en courant pour éviter les surcharges des composants, l'équilibrage forcé s'appuie nécessairement sur un asservissement des grandeurs électriques associées aux cellules à savoir la tension à leurs bornes ou le courant les traversant.

Que l'on opère en régime d'équilibrage naturel ou forcé, les niveaux nominaux de tension ne doivent pas nécessairement être les mêmes pour tous les éléments ; il suffit que ces niveaux soient connus. Ainsi, on peut réaliser un équilibrage à tensions nominales variables prenant en compte les températures des différents éléments. Il est également possible de gérer une association d'éléments réalisés en technologies différentes. Dans ce cas on parlera d'« équilibrage en niveau de charge » plutôt que d'équilibrage en tension.

Jusqu'ici on a considéré exclusivement le cas de l'équilibrage en tension d'une association série d'éléments de stockage (en particulier électrochimique) d'énergie électrique. Le système de l'invention peut également être utilisé pour équilibrer une association série d'éléments de génération d'énergie électrique, en particulier de type photovoltaïque, comme illustré par la figure 9.

Comme expliqué plus haut si, dans une association série de cellules photovoltaïques, une des cellules ($PV_i$) est ombragée ou défectueuse, elle se comporte comme un consommateur de courant et la tension $V_i$ à ses bornes devient fortement négative. Un système de gestion selon l'invention, fonctionnant en régime naturel, permet d'imposer une différence de potentiel positive aux bornes de cet élément, qui agit donc comme générateur (même si à un niveau de puissance réduit par rapport aux autres éléments, car justement il est ombragé ou défectueux). Dans ces conditions, le courant $I_{PVi}$ qui traverse l'élément ombragé ou défectueux est moindre que celui ($I_{OPTI}$) qui traverse tous les éléments ; en outre, un courant ($I_{OPTI}-I_{PVi}$) circule dans les inducteurs $L_{i-1}$ et $L_i$ pour « soutenir » cet élément. Il est également possible d'opérer en régime d'équilibrage forcé : dans ce cas, les bras d'onduleur sont asservis en courant, de manière à imposer un courant ($I_{OPTI}-I_{PVi}$) dans les inducteurs $L_{i-1}$ et $L_i$; il en résulte un ajustement automatique de $V_i$.

Le système de l'invention permet aussi de détecter des cellules (ou groupes de cellules) défaillantes ou ombragées. Pour tester l'état de fonctionnement de la cellule $PV_i$, il suffit de piloter les interrupteurs des bras $B_{i-1}$ et $B_i$ afin d'imposer une tension connue au point milieu de chacun de ces deux bras, ce qui conduit à la même configuration que celle illustrée sur la figure 9. En supposant connue la caractéristique tension-courant de la cellule, la mesure du courant circulant dans $L_{i-1}$ et $L_i$ permet de déterminer son niveau d'ombrage.

L'opération peut être répétée pour toutes les cellules (ou groupes de cellules) du panneau et ceci de façon séquentielle ou simultanée.

Il est intéressant de noter que la détection des cellules ombragées ou défaillantes ne nécessite aucun composant supplémentaire. Certes, des capteurs du courant $I_{Ln}$ doivent être prévus, mais en général de tels capteurs sont nécessaires en tout cas pour l'asservissement du système de gestion.

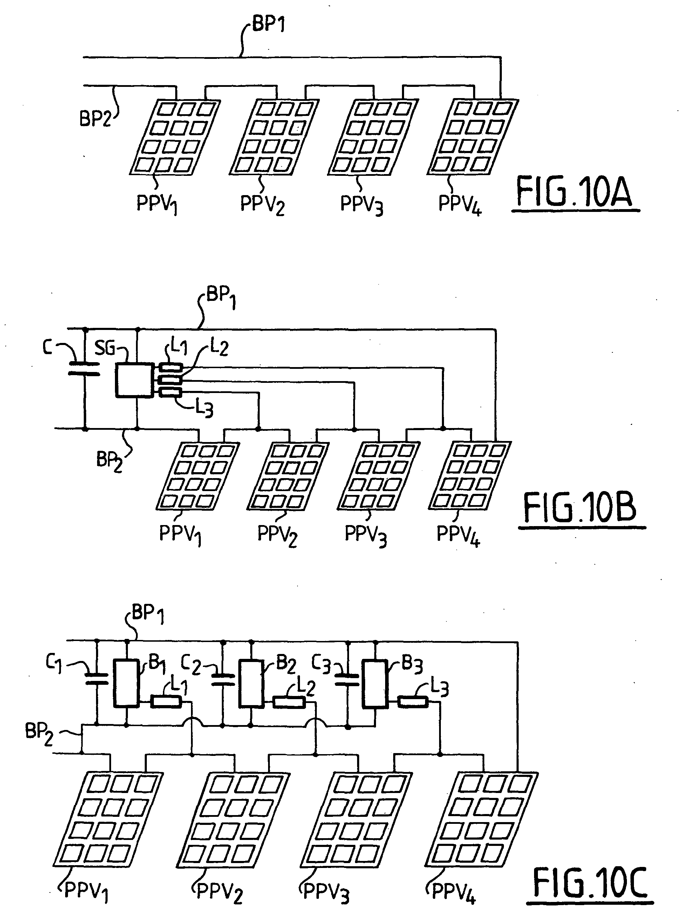

Un système selon l'invention permet également d'équilibrer des ensembles de cellules photovoltaïques prises collectivement, comme par exemple des panneaux solaires. Par exemple, la figure 10A montre un ensemble de quatre panneaux photovoltaïques $PPV_1$ - $PPV_4$ reliés en série entre eux et connectés à deux barres de puissance $BP_1$ et $BP_2$. En principe, la question de l'équilibrage de ces panneaux se pose exactement dans les mêmes termes que celle de l'équilibrage des cellules à l'intérieur d'un même panneau.

Dans le schéma de la figure 10B, l'équilibrage des panneaux est réalisé au moyen d'un système de gestion SG selon l'invention, réalisé de manière centralisée, c'est à dire intégrant tous les bras d'onduleur. Cette solution est cependant pénalisée par une connectique complexe. La figure 10C illustre une configuration décentralisée, dans laquelle chaque bras d'onduleur $B_1$ - $B_3$ est réalisé à proximité du panneau photovoltaïque auquel il est associé. Dans ce mode de réalisation, afin d'éviter les problèmes associés à des boucles de commutation de grande surface et donc de grande inductance, il est préférable qu'un condensateur $C_1$, $C_2$ $C_3$ soit associé à chaque bras d'onduleur, à proximité immédiate de ce dernier.

Quel que soit le mode de réalisation retenu, la partie active d'un système selon l'invention est essentiellement constituée par une pluralité de bras d'onduleur en parallèle, comportant chacun deux interrupteurs commandés qui, comme le montrent les figures 8A et 8B, sont généralement réalisés sous la forme de transistors, par exemple de type MOSFET. Une réalisation sous la forme de MOSFETs complémentaires (technologie CMOS) est particulièrement préférée ; en effet, elle permet d'alimenter la commande rapprochée des transistors de puissance directement sur la barre de puissance à tension positive. Dans le mode de réalisation de la figure 8B, les interrupteurs $T_h$ sont des N-MOSFETs reliés par leurs drains à la première barre de puissance $BP_1$ et par leurs sources aux points milieux PM, tandis que les interrupteurs $T_b$ sont des P-MOSFETs reliés par leurs drains à la deuxième barre de puissance BP2 et par leurs sources aux points milieux PM. La surface des P-MOSFETs doit être plus grande que celle des N-MOSFETs en raison de leur moindre conductivité. Dans le mode de réalisation de la figure 8A, les deux transistors sont reliés au point milieu PM par leurs drains ; dans cette configuration, l'interrupteur $T_h$ est un P-MOSFET et le transistor $T_b$ un N-MOSFET. Cette configuration permet de simplifier la commande du système, car les signaux de commande (appliqués aux grilles des transistors) sont référencés à un même niveau de tension (celui des sources) pour tous les demi-bras.

Tant que des tensions/puissances relativement modestes sont en jeu, il est possible d'utiliser des composants conventionnels, à structure latérale. La réalisation intégrée du système ne pose alors pas de difficulté particulière.

En revanche, pour des applications à plus haute tension/puissance, il est nécessaire d'utiliser des composants à structure verticale, dont l'intégration est problématique. Néanmoins tous (ou une partie de) les transistors d'un même type - P ou N - peuvent être réalisés sur une même puce ; de cette manière le système, ou au moins sa partie active de puissance, peut prendre la forme d'un module bi-puces. La réalisation d'un ensemble de bras d'onduleurs sous la forme d'un module bi-puces est décrite en détail dans le document WO 2011004081 ainsi que dans le document US 2008/0135932. Un exemple particulier, non limitatif, de module bi-puces sera décrit synthétiquement ci-après à l'aide des figures 7A et 7B.

La figure 7A montre une vue en coupe d'une portion d'une puce semiconductrice servant à la réalisation d'un tel module bi-puces.

Cette puce comporte un premier substrat $S_1$ réalisé en matériau semiconducteur (typiquement silicium) dégénéré, c'est à dire présentant une concentration élevée de dopants - en l'espèce, donneurs d'électrons - qui lui confèrent une conductivité quasi-métallique. L'épaisseur du premier substrat $S_1$ est typiquement de l'ordre de 500 $\mu$m, de manière à lui conférer une résistance mécanique suffisante lors de la fabrication. Une couche de métallisation MD est réalisée sur une face, dite « face arrière » de ce substrat.

Sur la «face avant» du substrat $S_1$, opposée à ladite face arrière, est déposée une couche épitaxiale $S_2$ de matériau semiconducteur, à l'intérieur de laquelle seront réalisés les dispositifs électroniques de puissance. Cette couche présente un dopage du même type que celui du premier substrat, mais de concentration moindre (N-). L'épaisseur de cette couche $S_2$ est typiquement d'environ 50 $\mu$m ou moins.

Par des procédés de photolithographie tout à fait classiques en « face avant », des dispositifs électroniques tels que des MOSFETs à canal N (symbole sur la droite de la figure) sont réalisés à l'intérieur de la couche épitaxiale $S_2$. Par exemple, dans le cas illustré sur la figure 7A, des régions « de corps » RC à dopage P et des régions de contact CO à dopage N+ sont réalisées à la surface de ladite couche. Les régions de corps et de contact délimitent les régions de canal CH, au-dessus desquelles sont réalisées des électrodes de grille CG en polysilicium isolées par des couches d'oxyde isolant. Des métallisations MS sont déposées au-dessus des régions de contact CO. D'une manière connue, ces métallisations réalisent des prises de contact de source des différentes cellules MOSFET (ou d'émetteur, si les dispositifs sont des IGBT), tandis que la couche de métallisation en face arrière MD réalise un contact de drain commun (de collecteur commun, pour les IGBT).

Les régions de canal CH et les régions « de corps » RC forment les zones « actives » des dispositifs. La partie plus profonde de la couche $S_2$, s'étendant jusqu'à l'interface avec le substrat $S_1$ constitue la zone de diffusion ou de tenue en tension ZD. D'une manière conventionnelle en électronique de puissance, chaque transistor peut être formé de plusieurs « cellules élémentaires », dont chacune comporte une région « de corps » RC à dopage P et une ou deux régions de contact CO à dopage N+.

Les régions actives et de tenue en tension des dispositifs ainsi réalisés sont isolées les unes des autres par des tranchées TP, réalisées par gravure profonde au moyen de faisceaux d'ions réactifs, remplies de diélectrique (généralement, mais pas obligatoirement, du $SiO_2$). Ces tranchées ne s'étendent pas à l'intérieur du substrat $S_1$, ou alors seulement pour une fraction de sa profondeur: par conséquent, les drains de tous les transistors de la puce sont reliés électriquement entre eux et maintenus à un même potentiel. Cela n'est nullement un inconvénient dans l'application considérée, où effectivement tous les drains des transistors N (respectivement : P) doivent être connectés à la première (respectivement : deuxième) barre de puissance.

Les tranchées TP ont une double fonction. D'une part, comme cela a été discuté plus haut, elles permettent l'ilotage des différents dispositifs qui doivent pouvoir commuter indépendamment les uns des autres ; d'autre part, elles assurent la terminaison des équipotentielles aux bords de la région de tenue en tension. Cette deuxième fonction est importante, et mérite que l'on s'y attarde. La zone de tenue en tension ZD est la partie du dispositif dans laquelle se produit l'essentiel de la tenue en tension entre le drain et la source (dans le cas d'un transistor à effet de champ). Dans cette région, les surfaces équipotentielles sont approximativement planes. Le dispositif est dimensionné de manière à éviter que des claquages ne se produisent à l'intérieur de la zone de tenue en tension ; cependant, des claquages risquent de se produire sur les bords latéraux du dispositif, au niveau de défauts de surface. Pour cette raison il est nécessaire de délimiter la zone de tenue en tension par des tranchées présentant des surfaces latérales lisses, remplies d'un diélectrique suffisamment rigide (notamment du $SiO_2$ par dépôt chimique en phase vapeur). Voir à ce propos l'article le Philippe Leturcq, « Tenue en tension des semi-conducteurs de puissance », D 3 104-1, Techniques de l'ingénieur, traité génie électrique.

Des simulations montrent que la tenue en tension des dispositifs est maximisée lorsque les tranchées sont légèrement évasées, de telle sorte que la surface latérale de la zone ZD forme un angle d'environ 100° avec l'interface $S_1/S_2$. Dans ces conditions, les équipotentielles sortant de la zone ZD s'infléchissent vers le bas (vers ladite interface $S_1/S_2$) avant de remonter vers la surface avant de la puce.

Jusqu'ici on a considéré uniquement l'intégration monolithique des dispositifs constituant la « moitié supérieure » (transistors $T_h$) d'un ensemble de bras de pont en parallèle. La « moitié inférieure » (transistors $T_b$) est intégrée dans une puce présentant la même structure que celle représentée sur la figure 7A, mais utilisant des substrats $S_1$, $S_2$ de type P pour réaliser des transistors à canal P.

Après avoir réalisé séparément les deux puces $P_1$ et $P_2$ intégrant de manière monolithique les interrupteurs de la partie haute et de la partie basse du module, respectivement, il est nécessaire de les relier électriquement et mécaniquement entre elles de manière à former les paires d'interrupteurs constituant chaque bras de pont. La manière la plus avantageuse de procéder consiste à réaliser un empilement tridimensionnel comme représenté sur la figure 7B.

Le module de puissance représenté en coupe sur cette figure est obtenu en superposant deux puces intégrant chacune une pluralité d'interrupteurs de telle manière que les « bornes libres » des interrupteurs de la première puce soient disposées en regard des bornes libres correspondantes des interrupteurs de la deuxième puce, de manière à former des bras de pont.

Du haut en bas, l'empilement de la figure 7B comprend :

- Un élément conducteur BV+ destiné à être relié à la première barre de puissance $BP_1$, maintenue à une tension positive ;

- Une première puce semiconductrice $P_1$, de type N, comprenant un premier substrat dégénéré $S_1N$, en contact électrique avec l'élément BV+ et une couche épitaxiale $S_2N$ dans laquelle sont réalisés des transistors N-MOSFET à structure verticale (référence T). Comme expliqué en référence à la figure 7A, les drains de ces transistors sont maintenus à un potentiel commun par le premier substrat dégénéré $S_1N$ et l'élément conducteur BV+. Les zones actives et de tenue en tension des transistors sont séparées les unes des autres par des sillons d'ilotage SI, réalisant des terminaisons de type « mesa ».

- Une couche de métallisation de source MS1, rendue discontinue par les sillons d'isolation.

- Des éléments de connexion électrique BS, généralement métalliques, réalisant les bornes de sortie du module.

- Une couche de métallisation MD2, également rendue discontinue par les sillons d'isolation, pour réaliser l'interconnexion des drains des transistors P-MOSFET formant la partie inférieure de l'ensemble de bras de ponts.

- Une deuxième puce semiconductrice $P_2$, de type P, comprenant une couche épitaxiale $S_2P$ dans laquelle sont réalisés des transistors P-MOSFET à structure verticale et un premier substrat dégénéré $S_1P$. Un transistor N-MOSFET de la première puce et un transistor P-MOSFET de la deuxième couche forment un bras de pont, dont le point milieu coïncide avec une borne de sortie BS. Les sources des P-MOSFET sont reliées aux bornes de sortie correspondantes par des couches de métallisation MD2 respectives.

- Un élément conducteur BV- en contact électrique avec le substrat dégénéré $S_1P$, et donc avec les drains des P-MOSFET, destiné à être relié à la deuxième barre de puissance $BP_2$, maintenue à une tension négative par rapport à ladite première barre $BP_1$.

L'assemblage peut être assuré par brasage, collage ou serrage.

Ce qui a été dit pour les MOSFETs vaut également pour d'autres types de dispositifs semi-conducteurs susceptibles de réaliser des interrupteurs commandés (IGBT, thyristors...). L'utilisation d'une structure complémentaire n'est d'ailleurs pas essentielle.

D'une manière connue en soi, les signaux de pilotage émis par le moyen de commande MC ne sont pas appliqués directement aux grilles des transistors des bras d'onduleur, mais pilotent plutôt des circuits de commande rapprochée qui, eux, engendrent des signaux permettant une commutation franche des dispositifs de puissance. Les circuits de commande rapprochée peuvent être co-intégrés avec les transistors de puissance à structure verticale.

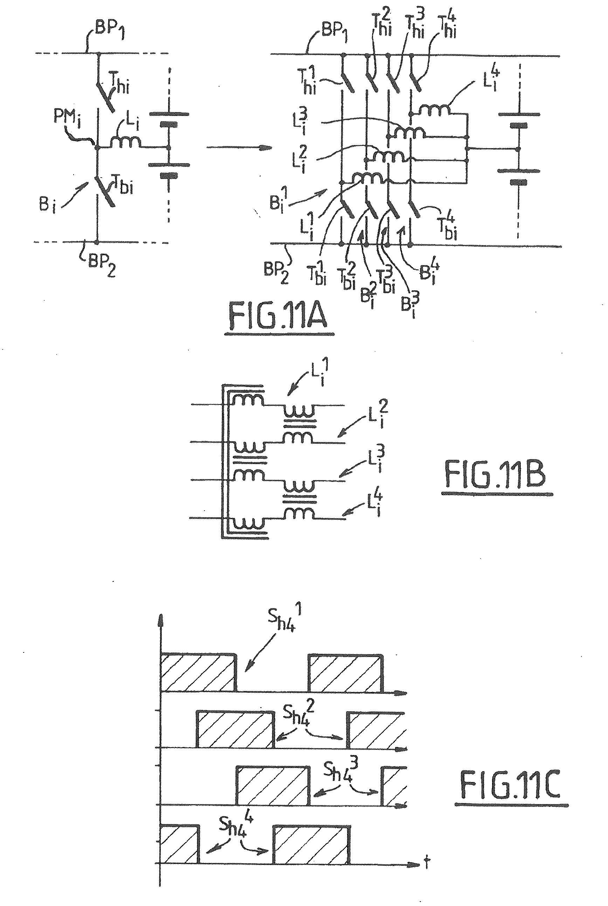

Un système de gestion selon les modes de réalisation de l'invention décrits jusqu'ici comprend entre n-1 et n+1 inducteurs et entre 2(n-1) et 2(n+1) interrupteurs, n étant le nombre d'éléments de stockage ou de génération d'énergie électrique, plus le condensateur C et la connectique. Les interrupteurs pouvant être intégrés de manière efficace, ce sont les inducteurs qui contribuent le plus à la masse et à l'encombrement du système. En effet, il est nécessaire d'assurer que le noyau ferromagnétique de chaque inducteur présente une section suffisante à éviter tout risque de saturation. La section minimale requise dépend du courant maximal susceptible de traverser l'inducteur, qui à son tour dépend du bras d'onduleur auquel il est connecté. Les figures 11A et 11B illustrent des modes de réalisation alternatifs qui, malgré une augmentation apparente de la complexité du système de gestion, permettent de réduire sensiblement l'encombrement et la masse de ses éléments réactifs.

Comme illustré sur la figure 11A l'idée consiste essentiellement à remplacer chaque bras d'onduleur (un seul, $B_i$, est représenté sur la partie gauche de la figure) par N bras « élémentaires » connectés en parallèle (N=4 sur la figure), indiqués par les références $B_i^1$-$B_i^4$ (partie droite de la figure). Chacun de ces bras présente un point milieu $PM_i^1$-$PM_i^4$, auquel est connectée une première borne d'une inductance respective $L_i^1$-$L_i^4$. Les deuxièmes bornes des inductances $L_i^1$-$L_i^4$ sont reliées entre elles, pour être connectées à un même point de l'association série d'élément de stockage ou de génération. Les signaux de commande des interrupteurs $T_{hi}^1$- $T_{hi}^4$, $T_{bi}^1$- $T_{bi}^4$ des bras élémentaires $B_i^1$-$B_i^4$ qui remplacent un même bras d'onduleur $B_i$ sont décalés d'une fraction 1/N (ici : ¼) de période. Bien que le nombre d'inductances du système de gestion augmente d'un facteur N, l'ondulation du courant diminue ce qui permet de réduire leur taille globale.

La réduction de taille des inducteurs est optimale quand le nombre N de bras élémentaires est égal au nombre n d'éléments de stockage ou de génération d'énergie électrique de l'association ; dans ces conditions, les signaux de commande des interrupteurs de chaque bras d'onduleur présentent des rapports cycliques dont les valeurs vont de 1/n à (n-1)/n - c'est-à-dire de 1/N à (N-1)/N.

Le mode de réalisation de la figure 11A convient donc particulièrement à la gestion d'associations série comprenant un nombre relativement limité d'éléments, typiquement jusqu'à dix.

Les signaux de commande $S_{h4}^1$-$S_{h4}^4$ des interrupteurs « hauts » $T_{h4}^1$-$T_{h4}^4$ sont illustrés sur la figure 11C ; on peut voir que, N étant égal à 4, ces signaux sont décalés d'un quart de période. Ces signaux présentent tous le même rapport cyclique qui, dans ce cas particulier (i=4 ; il s'agit donc des bras élémentaires connectés à la borne positive du premier élément de stockage à partir de la barre de puissance $PB_2$) vaut ¼. Les signaux de commande des interrupteurs « bas » $T_{b4}^1$-$T_{b4}^4$ sont complémentaires aux signaux $S_{h4}^1$-$S_{h4}^4$.

La taille des inducteurs $L_i^1$-$L_i^4$ peut être ultérieurement réduite par l'utilisation d'un couplage en cascade cyclique, illustré sur la figure 11B. Dans ce cas, l'inducteur de chaque bras élémentaire est couplé de proches en proches avec les inducteurs voisins via des noyaux magnétiques simples à deux enroulements. Si nécessaire - ce qui est souvent le cas en pratique - une jambe de fuite peut être prévue au niveau de chaque paire d'enroulement couplé pour assurer un filtrage efficace lorsque les ordres de commande ne sont exactement décalés de 1/N ou que leur valeur n'est exactement une fraction de N, par exemple pour des raisons d'asservissement. Cela permet le bouclage des lignes de champ magnétique non communes aux deux enroulements couplés sur le même noyau magnétique.

Dans les systèmes de gestion selon l'invention, chaque bras d'onduleur doit supporter la totalité de la différence de potentiel aux bornes de l'association série à gérer. De ce fait, l'architecture basée sur une pluralité de bras d'onduleur de tension en parallèle convient particulièrement bien aux applications à tension relativement basse, par exemple (en faisant référence à la figure 1) pour l'équilibrage des cellules d'accumulateur CA formant un module M. Avantageusement, un système de gestion différent pourra être utilisé pour l'équilibrage des différents modules connectés en série pour former un « stack » S, dans le cadre d'un système global de gestion de type hiérarchisé.

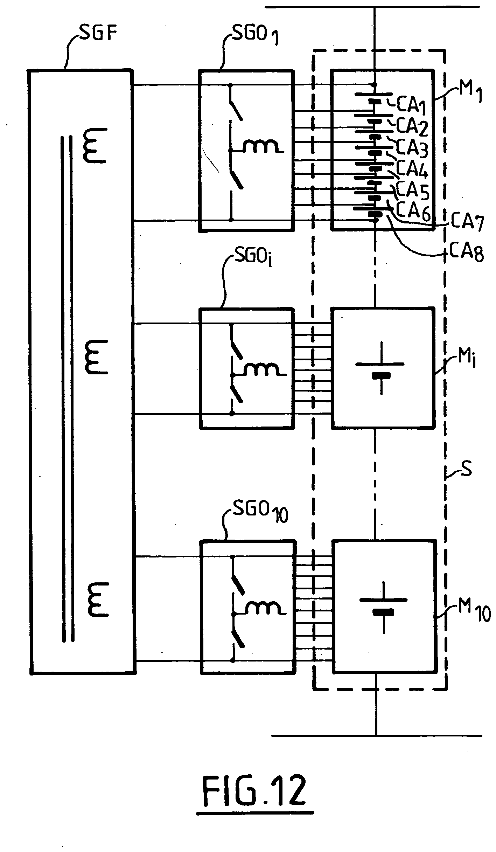

La figure 12 illustre très schématiquement un tel système, dans lequel des systèmes de gestion $SGO_1$...$SGO_i$...$SGO_{10}$ du type de la figure 3A sont utilisés pour équilibrer les cellules d'accumulateurs $CA_1$ - $CA_8$ de chacun de 10 modules $M_1$...$MO_i$...$M_{10}$ formant un « stack » S. L'équilibrage entre les modules, considérés comme des unités indivisibles, est réalisé par un système de gestion basé sur des convertisseurs de type « flyback » SGF, qui sera décrit plus loin. Une telle solution hiérarchisée présente un double avantage :

- Chaque bras d'onduleur ne doit supporter que la tension générée par un seul module. Si un système du type de la figure 3A était utilisé pour l'équilibrage du « stack » tout entier, la différence de potentiel aux bornes de ses bras d'onduleur serait dix fois plus élevée, ce qui rendrait l'intégration monolithique desdits bras plus difficile et la taille des inductances bien plus importante.
- Les systèmes de gestion $SGO_1$ - $SGO_{10}$ peuvent être du type des figures 11A ou 11B. Etant donné que chaque module comprend n=8 cellules, le nombre N de bras élémentaires sera N=8, pour un total de Nn=64 inducteurs par module, et donc 640 inducteurs pour tout le « stack » (auxquels il faut ajouter les 10 enroulements du système de gestion de type « flyback »). Si on voulait équilibrer le « stack » tout entier - comprenant 80 cellules en série - avec un système présentant l'architecture de la figure 11A, il faudrait utiliser 80x80=6400 inducteurs, soit dix fois plus.

L'intérêt de l'approche hiérarchique est donc clair.

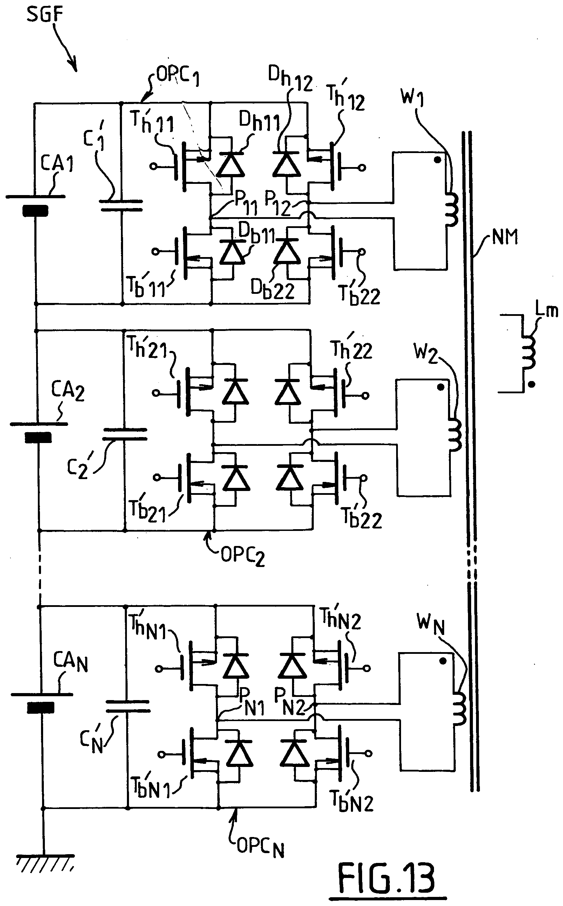

Le système de gestion de type « flyback » SGF représenté sur la figure 12 a été décrit en détail dans la demande de brevet en France FR 10/00671 du 17 février 2010. Sa structure et son fonctionnement seront également décrits ci-après en référence à la figure 13. Comme le montre cette figure, un système d'équilibrage selon l'invention associe à chaque module $M_1$, $M_2$, ... $M_N$ un onduleur en pont complet et un enroulement de coupleur magnétique.

Chaque onduleur en pont complet $OPC_1$, $OPC_2$, ... $OPC_N$ est constitué par l'association parallèle de deux bras de pont, dont les ports d'extrémité sont reliés aux terminaux de l'élément de batterie correspondant par des connecteurs respectifs ; chaque bras de pont, à son tour, est constitué de deux interrupteurs en série. Dans le mode de réalisation considéré ici, les bras de pont sont réalisés en technologie C-MOS : l'interrupteur « supérieur » (destiné à être connecté au terminal positif de l'élément de batterie) de chaque bras est un P-MOS, tandis que son interrupteur « inférieur » (destiné à être connecté au terminal négatif de l'élément de batterie) est un N-MOS. Sur la figure « $T'_{hnm}$ » et « $T'_{bnm}$ » signifient, respectivement transistor supérieur (« haut ») / inférieur (« bas ») du bras n (n=1 ou 2) de l'onduleur associé à l'élément de batterie m (m=1 à N). Les diodes de corps des transistors sont indiquées par « $D_{hnm}$ ».

Les points milieux $P_{1i}$, $P_{2i}$ des bras (« i » étant l'indice de l'onduleur) sont reliés à des enroulements respectifs $W_i$ réalisés sur un noyau magnétique commun NM qui réalise un couplage magnétique entre tous les enroulements. Le noyau magnétique NM et les enroulements $W_i$ forment un coupleur magnétique reliant entre eux tous les onduleurs.

La référence $L_m$ identifie l'inductance magnétisante du coupleur.

Un condensateur $C'_1$...$C'_N$ est connecté en parallèle à chaque module du « stack ». Sa fonction est principalement de filtrer les composantes à haute fréquence créées par les découpages des grandeurs électriques (tensions, courants) provoqués par la commutation des transistors. Comme cela sera discuté plus loin, il sert également à assurer la continuité de l'alimentation de l'onduleur et de l'électronique associée.

Il est intéressant de noter que la partie active du système de gestion « flyback » de la figure 13 est constitué de paires de bras d'onduleurs connectées entre les bornes de chaque module. Cela signifie qu'il est extrêmement simple de co-intégrer en technique « bi-puces » un systèmes de gestion $SGO_i$ et l'onduleur correspondant du système SGF : il suffit de rajouter deux bras d'onduleur à chaque module bi-puces du type représenté sur la figure 7B.

Le système « flyback » de la figure 13 peut fonctionner en régime d'équilibrage « naturel ». Dans ce régime, tous les onduleurs sont pilotés de manière synchrone, par un signal de commande à modulation de largeur d'impulsions avec un rapport cyclique égal à 0,5, ayant de préférence une fréquence supérieure à 20 kHz (c'est à dire supérieure au seuil de l'audible, pour ne pas engendrer des nuisances sonores).

Dans une première moitié du cycle l'interrupteur inférieur du premier bras et l'interrupteur supérieur du deuxième bras de chaque onduleur sont fermés ; dans la deuxième moitié du cycle, ce sont l'interrupteur supérieur du premier bras et l'interrupteur inférieur du deuxième qui sont fermés.

Pendant le premier demi-cycle, les modules le plus chargés tendent à se décharger à travers leurs enroulements respectifs, ce qui engendre un flux magnétique variable dans le noyau magnétique NM, qui à son tour engendre un courant dans les enroulements des modules les moins chargés, tendant à charger lesdits modules.

Le problème est qu'une partie du courant qui circule charge l'inductance magnétisante $L_m$ du coupleur magnétique formé par le noyau magnétique et les différents enroulements. Pour éviter que cette inductance parvienne à saturation, au bout d'un certain temps (quelques dizaines de microsecondes) il est nécessaire d'inverser la polarisation des enroulements afin d'assurer que la tension moyenne à leurs bornes soit nulle : on ouvre les interrupteurs qui étaient fermés lors de la première moitié du cycle et on ferme ceux qui étaient ouverts. Le sens des courants s'inverse, mais le transfert d'énergie continue à se faire des modules les plus chargés vers ceux qui sont moins chargés. En outre, l'énergie stockée dans l'inductance magnétisante $L_m$ du coupleur est libérée, puis stockée à nouveau sous la forme d'un courant en sens inverse.

L'équilibrage « naturel » ne concerne pas nécessairement l'ensemble des modules du « stack » : il est possible de piloter seulement un sous-ensemble d'onduleurs, laissant les autres en configuration ouverte, de manière à ce qu'ils découplent les modules correspondant du système d'équilibrage. Dans ce cas, l'équilibrage ne se produit qu'entre les modules associés aux onduleurs actifs.

Il existe aussi un autre mode de fonctionnement, que l'on peut appeler « forcé », qui réalise un transfert indirect d'énergie avec stockage temporaire par l'inductance magnétisante $L_m$. Dans ce mode de fonctionnement on opère en deux temps. Dans le premier demi-cycle, seul un onduleur (ou plusieurs onduleurs associés à des modules chargés à des niveaux de tensions proches entre eux, avec des écarts de quelques millivolts au plus) est piloté, tandis que les autres sont inactifs et isolent les éléments de batterie respectifs du coupleur magnétique. L'onduleur qui est piloté est associé à un module qui doit être déchargé partiellement pour transférer son excès de charge à d'autres éléments. Deux interrupteurs de l'onduleur sont fermés, de manière à permettre le passage d'un courant électrique à travers l'enroulement (par exemple : l'interrupteur supérieur du deuxième bras et l'interrupteur inférieur du premier bras). Comme les autres enroulements du coupleur magnétique sont en circuit ouvert, ce courant sert entièrement à charger l'inductance magnétisante $L_m$.

Dans le deuxième demi-cycle, les interrupteurs de l'onduleur qui étaient pilotés en précédence sont ouverts, tandis que les onduleurs associés à des éléments de batterie destinés à recevoir un supplément de charge sont pilotés de manière à permettre le déstockage de l'énergie accumulée par l'inductance magnétisante lors du premier demi-cycle.

L'équilibrage forcé est plus complexe à mettre en oeuvre que l'équilibrage naturel. En outre, si la commande n'est pas effectuée correctement, il est susceptible de provoquer un « sur-équilibrage », c'est à dire une surcharge du ou des modules qui étaient initialement sous-chargés.

Son point de force est représenté par sa flexibilité : en effet, il permet de transférer de l'énergie d'un module déterminé vers un ou plusieurs autres, d'une manière contrôlée. En outre, dans des cas particuliers un « sur-équilibrage » peut être intentionnel, par exemple si on souhaite « anticiper » sur la faiblesse d'un module en phase de décharge (en la surchargeant - sans excéder les limites de sécurité - pour compenser le fait que sa décharge sera plus rapide de celle des autres éléments).

En revanche, l'équilibrage forcé ne peut pas fonctionner si la différence de potentiel entre les modules les plus chargés et les moins chargés est trop élevée, typiquement supérieure à 1,4 V environ. En effet, il ne faut pas oublier que les onduleurs ne sont pas constitués par des interrupteurs idéaux, mais par des transistors de puissance pourvus d'une diode de corps antiparallèle. Si $V_{CA1}$-$V_{CA3}$ est supérieure à 1,4V environ (deux fois la tension d'activation de ces diodes), elles deviennent passantes de manière intempestive, ce qui est incompatible avec le schéma de fonctionnement décrit ci-dessus.

L'équilibrage forcé peut également être réalisé en utilisant plusieurs éléments donneurs - à conditions qu'ils soient tous chargés au même niveau de tension - et plusieurs éléments récepteurs - même chargés à des niveaux de tension différents.

Il existe aussi un troisième mode de commande du système de l'invention qui peut être qualifié de « mixte ». Ce mode de commande se différencie de l'équilibrage naturel seulement en ce qu'un déphasage variable est introduit entre les signaux de commande des différents onduleurs. Dans le cas de l'équilibrage naturel, le transfert d'énergie s'effectue principalement en direct via le coupleur, sans stockage inductif ; dans le cas de l'équilibrage forcé, l'énergie est essentiellement transférée par l'inductance magnétisante du coupleur ; dans le cas de l'équilibrage mixte, un transfert direct de l'énergie entre les cellules est également réalisé, mais son intensité et son sens peuvent être ajustés compte tenu de l'inductance de fuite, en série avec le coupleur. Cet ajustement est réalisé par l'introduction du déphasage entre les signaux de commande des différents onduleurs.

Le document US 6,873,134 décrit un autre type d'équilibreur « flyback » utilisant des onduleurs à demi-pont au lieu des onduleurs à pont complet du système de la figure 13. Un tel équilibreur peut, lui aussi, être utilisé dans un système hiérarchique du type de la figure 12.

L'architecture hiérarchique des figures 12 et 13 a été décrite en référence à son application à une batterie, mais elle peut être appliquée également à d'autres systèmes de génération ou de stockage d'énergie électrique présentant une structure modulaire, tels que des panneaux solaires.

## Revendications

1. Système de gestion d'une association série d'éléments de stockage ($CA_1$-$CA_N$) ou de génération d'énergie électrique ($PV_1$-$PV_N$), ledit système comportant :

   - une première ($BP_1$) et une deuxième ($BP_2$) barres de puissance ;
   - une pluralité de bras d'onduleur ($B_0$-$B_n$) connectés en parallèle entre ladite première ($BP_1$) et ladite deuxième ($BP_2$) barres de puissance, chaque bras d'onduleur ($B_i$) étant à son tour constitué par deux interrupteurs ($T_{hi}$, $T_{bi}$) connectés en série par l'intermédiaire d'un point dit point milieu ($PM_i$) du bras;
   - une pluralité de connecteurs formant des liaisons pour relier le point milieu ($PM_i$) de chaque bras d'onduleur ($B_i$) à ladite association série, entre deux éléments adjacents distincts pour les chaque points milieu ;

   ledit système étant **caractérisé en ce qu'**il comprend en outre une pluralité d'inducteurs ($L_0$-$L_n$) au travers desquels lesdites liaisons sont respectivement réalisées.

2. Système de gestion selon la revendication 1 comportant également un premier connecteur pour relier la première barre de puissance ($BP_1$) à une borne positive de l'élément de stockage ou de génération d'énergie électrique situé à une extrémité positive de ladite association série, et un deuxième connecteur pour relier la deuxième barre de puissance ($BP_2$) à une borne négative de l'élément de stockage ou de génération d'énergie électrique situé à une extrémité négative de ladite association série.

**3.** Système de gestion selon la revendication 2 comportant également deux inducteurs ($L_0$ ; $L_n$) connectés en série auxdits premier et deuxième connecteur.

**4.** Système de gestion selon la revendication 1 comportant également :

- un bras d'onduleur ($B_0$) connecté entre ladite première ($BP_1$) et ladite deuxième ($BP_2$) barres de puissance, dont le point milieu ($PM_0$) est relié par l'intermédiaire d'un inducteur respectif ($L_0$) à une extrémité positive de ladite association série ; et
- un bras d'onduleur ($B_n$) connecté entre ladite première ($BP_1$) et ladite deuxième ($BP_2$) barres de puissance, dont le point milieu ($PM_n$) est relié par l'intermédiaire d'un inducteur respectif ($L_n$) à une extrémité négative de ladite association série ;
- un condensateur (C) étant en outre connecté entre lesdites première et deuxième barres de puissance.

**5.** Système de gestion selon l'une des revendications précédentes dans lequel lesdits inducteurs ($L_0$-$L_n$) présentent tous une même valeur d'inductance et sont réalisés sous la forme de bobinages autour de colonnes respectives d'un noyau magnétique (NM) à culasses mutualisées, réalisant ainsi un circuit magnétique unique.

**6.** Système de gestion selon l'une des revendications précédentes comportant également un moyen de commande (MC) pour piloter de manière alternée les interrupteurs de tous ou d'une partie desdits bras d'onduleur, avec un rapport cyclique choisi de manière à déterminer un niveau de tension moyen du point milieu de chacun desdits bras d'onduleur égal à un niveau de tension nominal prédéterminé.

**7.** Système de gestion selon l'une des revendications 1 à 5 comportant également un moyen de commande (MC) pour piloter de manière alternée les interrupteurs de tous ou d'une partie desdits bras d'onduleur, avec un rapport cyclique choisi de manière à déterminer un niveau de courant traversant le point milieu de chacun desdits bras d'onduleur égal à un niveau de courant nominal prédéterminé.

**8.** Système de gestion d'une association série d'éléments de stockage ($CA_1$-$CA_N$) ou de génération d'énergie électrique ($PV_1$-$PV_N$), ledit système comportant :

- une première ($BP_1$) et une deuxième ($BP_2$) barres de puissance ;
- une pluralité de bras d'onduleur ($B_0$-$B_n$) connectés en parallèle entre ladite première ($BP_1$) et ladite deuxième ($BP_2$) barres de puissance,
- une pluralité de connecteurs formant des liaisons pour relier un point milieu ($PM_i$) de chaque bras d'onduleur ($B_i$) à ladite association série, entre deux éléments adjacents distincts;

dans lequel N dits bras d'onduleur élémentaires ($B_i^1$-$B_i^4$), avec N>1, remplacent chacun desdits bras d'onduleurs ($B_i$), chaque bras d'onduleur élémentaire ($B_i^1$-$B_i^4$) étant à son tour constitué par deux interrupteurs ($T_{hi}^1$, $T_{bi}^1$-$T_{hi}^4$, $T_{bi}^4$) connectés en série par l'intermédiaire d'un point milieu ($PM_i^1$- $PM_i^4$) du bras d'onduleur élémentaire ($B_i^1$-$B_i^4$), les bras d'onduleurs élémentaires ($B_i^1$-$B_i^4$) étant reliés par leurs points milieux respectifs ($PM_i^1$-$PM_i^4$) et par l'intermédiaire d'inducteurs respectifs ($L_i^1$-$L_i^4$), à chacun desdits connecteurs,; le système comprenant également un moyen de commande pour piloter de manière périodique lesdits N bras d'onduleurs élémentaires connectés à un même conducteur avec un décalage de $1/N^{ème}$ de cycle.

**9.** Système hiérarchisé de gestion d'une association série (S) de modules (M) de stockage ou de génération d'énergie électrique, chaque module étant à son tour constitué d'une association série (CA) d'éléments de stockage ou de génération d'énergie électrique, ledit système comprenant :

- une pluralité de systèmes de gestion ($SGO_1$ - $SGO_{10}$) selon l'une des revendications précédentes, pour assurer la gestion de modules respectifs ; et
- un système de gestion (SGF) basé sur des convertisseurs de type flyback, pour assurer la gestion de l'association série desdits modules, considérés comme des unités indivisibles, ledit système de gestion (SGF) associant à chacun desdits modules un onduleur en pont complet et un enroulement de coupleur magnétique.

**10.** Association série d'éléments de stockage électrochimique d'énergie électrique comportant un système de gestion selon l'une des revendications précédentes.

**11.** Utilisation d'un système selon l'une des revendications 6 et 7 ou selon l'une des revendications 8 et 9 prise en combinaison avec la revendication 6 ou 7 pour réaliser un équilibrage en tension et/ou en niveau de charge des éléments d'une batterie électrochimique.

**12.** Utilisation d'un système selon l'une des revendication 6 et 7 ou selon l'une des revendications 8 et 9 prise en combinaison avec la revendication 6 ou 7, pour soutenir en courant une association série de cellules ou panneaux photovoltaïques.

13. Utilisation d'un système selon la revendication 6 ou l'une des revendications 8 et 9 prise en combinaison avec la revendication 6, pour détecter une cellule photovoltaïque, ou un ensemble de cellules photovoltaïques, défaillantes ou ombragées dans une association série de telles cellules, les interrupteurs des bras dont les points milieux connectés à ladite ou lesdites cellules au travers d'inducteurs étant pilotés afin d'imposer une tension connue auxdits points milieu de chacun de ces bras, par la mesure du courant circulant dans lesdits inducteurs.

**Patentansprüche**

1. System zur Verwaltung einer Reihenkombination von Elementen zur Speicherung ($CA_1$ - $CA_N$) oder zur Erzeugung von elektrischer Energie ($PV_1$ - $PV_N$), wobei das System umfasst:

- eine erste ($BP_1$) und eine zweite ($BP_2$) Stromschiene;
- eine Vielzahl von Wechselrichterarmen ($B_0$ - $B_n$), die zwischen der ersten ($BP_1$) und der zweiten ($BP_2$) Stromschiene parallel geschaltet sind, wobei jeder Wechselrichterarm ($B_i$) seinerseits aus zwei Schaltern ($T_{hi}$, $T_{bi}$) besteht, die mittels eines Mittelpunkt ($PM_i$) des Arms genannten Punktes in Reihe geschaltet sind;
- eine Vielzahl von Anschlüssen, welche Verbindungen bilden, um den Mittelpunkte ($PM_i$) jedes Wechselrichterarms ($B_i$) für die jeden Mittelpunkt (e) zwischen zwei einzelnen benachbarten Elementen mit der Reihenkombination zu verbinden;

wobei das System **dadurch gekennzeichnet ist, dass** es weiter eine Vielzahl von Induktoren ($L_0$ - $L_n$) umfasst, durch die hindurch die Verbindungen jeweils ausgeführt sind.

2. Verwaltungssystem nach Anspruch 1, ebenfalls einen ersten Anschluss umfassend, welcher an einem positiven Ende der Reihenkombination liegt, um die erste Stromschiene ($BP_1$) mit einer positiven Klemme des Elements zur Speicherung oder zur Erzeugung von elektrischer Energie zu verbinden, und einen zweiten Anschluss, welcher an einem negativen Ende der Reihenkombination liegt, um die zweite Stromschiene ($BP_2$) mit einer negativen Klemme des Elements zur Speicherung oder zur Erzeugung von elektrischer Energie zu verbinden.

3. Verwaltungssystem nach Anspruch 2, ebenfalls zwei Induktoren ($L_0$; $L_n$) umfassend, die mit dem ersten und zweiten Anschluss in Reihe geschaltet sind.

4. Verwaltungssystem nach Anspruch 1, ebenfalls umfassend:

- einen Wechselrichterarm ($B_0$), der zwischen der ersten ($BP_1$) und der zweiten ($BP_2$) Stromschiene angeschlossen ist, dessen Mittelpunkt ($PM_0$) mittels eines jeweiligen Induktors ($L_0$) mit einem positiven Ende der Reihenkombination verbunden ist; und
- einen Wechselrichterarm ($B_n$), der zwischen der ersten ($BP_1$) und der zweiten ($BP_2$) Stromschiene angeschlossen ist, dessen Mittelpunkt ($PM_n$) mittels eines jeweiligen Induktors ($L_n$) mit einem negativen Ende der Reihenkombination verbunden ist;
- wobei weiter ein Kondensator (C) zwischen der ersten und zweiten Stromschiene angeschlossen ist.

5. Verwaltungssystem nach einem der vorstehenden Ansprüche, wobei die Induktoren ($L_0$ - $L_n$) alle ein und denselben Induktivitätswert aufweisen und in der Form von Spulen um jeweilige Säulen eines Magnetkerns (NM) mit gemeinsamen Köpfen herum ausgeführt sind, wodurch ein einzelner Magnetkreis ausgeführt wird.

6. Verwaltungssystem nach einem der vorstehenden Ansprüche, ebenfalls ein Steuermittel (MC) umfassend, um die Schalter von allen oder von einem Teil der Wechselrichterarme abwechseln mit einem Zyklusverhältnis anzusteuern, das derart ausgewählt ist, dass ein mittlerer Spannungspegel des Mittelpunktes von jedem der Wechselrichterarme bestimmt wird, der gleich einem vorbestimmten Nennspannungspegel ist.

7. Verwaltungssystem nach einem der Ansprüche 1 bis 5, ebenfalls ein Steuermittel (MC) umfassend, um die Schalter von allen oder von einem Teil der Wechselrichterarme abwechselnd mit einem Zyklusverhältnis anzusteuern, das derart ausgewählt ist, dass ein den Mittelpunkt von jedem der Wechselrichterarme durchfließender Strompegel bestimmt wird, der gleich einem vorbestimmten Nennstrompegel ist.

8. System zur Verwaltung einer Reihenkombination von Elementen zur Speicherung ($CA_1$ - $CA_N$) oder zur Erzeugung von elektrischer Energie ($PV_1$ - $PV_N$), wobei das System umfasst:

- eine erste ($BP_1$) und eine zweite ($BP_2$) Stromschiene;
- eine Vielzahl von Wechselrichterarmen ($B_0$ - $B_n$), die zwischen der ersten ($BP_1$) und der zweiten ($BP_2$) Stromschiene parallel geschaltet sind,
- eine Vielzahl von Anschlüssen, welche Verbindungen bilden, um einen Mittelpunkt (PM$_i$) jedes Wechselrichterarms (B$_i$) zwischen zwei einzelnen benachbarten Elementen mit der Reihenkombination zu verbinden;

wobei N sogenannte elementare Wechselrichterarme (B$_i$$^1$ - B$_i$$^4$), wobei N>1, jeden der Wellenrichterarme (B$_i$) ersetzen, wobei jeder elementare Wechselrichterarm (B$_i$$^1$ - B$_i$$^4$) seinerseits aus zwei Schaltern (T$_{hi}$$^1$, T$_{bi}$$^1$ - T$_{hi}$$^4$, T$_{bi}$$^4$) besteht, die mittels eines Mittelpunktes (PM$_i$$^1$ - PM$_i$$^4$) des elementaren Wellenrichterarms (B$_i$$^1$ - B$_i$$^4$) in Reihe geschaltet sind; wobei die elementaren Wellenrichterarme (B$_i$$^1$ - B$_i$$^4$) über ihre jeweiligen Mittelpunkte (PM$_i$$^1$ - PM$_i$$^4$) und mittels jeweiliger Induktoren (L$_i$$^1$ - L$_i$$^4$) mit jedem der Anschlüsse verbunden sind; wobei das System ebenfalls ein Steuermittel umfasst, um die N mit ein und demselben Leiter verbundenen elementaren Wellenrichterarme mit einem Versatz von 1/N-tel Zyklus periodisch anzusteuern.

9. Hierarchisches System zur Verwaltung einer Reihenkombination (S) von Modulen (M) zur Speicherung oder zur Erzeugung von elektrischer Energie, wobei jedes Modul seinerseits aus einer Reihenkombination (CA) von Elementen zur Speicherung oder zur Erzeugung von elektrischer Energie besteht, wobei das System umfasst:

- eine Vielzahl von Verwaltungssystemen (SGO$_1$ - SGO$_{10}$) nach einem der vorstehenden Ansprüche, um die Verwaltung der jeweiligen Module sicherzustellen; und
- ein auf Wandlern vom Typ Sperrwandler basierendes Verwaltungssystem (SGF), um die Verwaltung der Reihenkombination der Module, welche als unteilbare Einheiten betrachtet werden, sicherzustellen, wobei das Verwaltungssystem (SGF) jedem der Module einen Vollbrücken-Wechselrichter und eine Magnetkopplerwicklung zuordnet.

10. Reihenkombination von Elementen zur elektrochemischen Speicherung von elektrischer Energie, die ein Verwaltungssystem nach einem der vorstehenden Ansprüche umfasst.

11. Verwendung eines Systems nach einem der Ansprüche 6 und 7 oder nach einem der Ansprüche 8 und 9 in Verbindung mit Anspruch 6 oder 7, um einen Spannungs- und/oder Ladezustandsausgleich der Elemente einer elektrochemischen Batterie auszuführen.

12. Verwendung eines Systems nach einem der Ansprüche 6 und 7 oder nach einem der Ansprüche 8 und 9 in Verbindung mit Anspruch 6 oder 7, um eine Reihenkombination von Photovoltaikzellen oder -platten mit Strom zu unterstützen.

13. Verwendung eines Systems nach Anspruch 6 oder einem der Ansprüche 8 und 9 in Verbindung mit Anspruch 6, um eine Photovoltaikzelle oder eine Gruppe von Photovoltaikzellen zu erkennen, die in einer Reihenkombination solcher Zellen ausgefallen sind oder im Schallen liegen, wobei die Schalter der Arme, deren Mittelpunkte durch Induktoren hindurch mit der oder den Zellen verbunden sind, durch das Messen des in den Induktoren fließenden Stroms so angesteuert werden, dass den Mittelpunkten jedes dieser Arme eine bekannte Spannung auferlegt wird.

**Claims**

1. Management system of an association in series of elements for storing (CA$_1$-CA$_N$) or generating electrical energy (PV$_1$-PV$_N$), said system comprising:

- a first (BP$_1$) and a second (BP$_2$) power bar;
- a plurality of inverter arms (B$_0$-B$_n$) connected in parallel between said first (BP$_1$) and said second (BP$_2$) power bars, each inverter arm (B$_i$) being in turn formed by two switches (T$_{hi}$, T$_{bi}$) connected in series by means of a point known as a midpoint (PM$_i$) of the arm;
- a plurality of connectors forming connections to link the midpoint (PM$_i$) of each inverter arm (B$_i$) to said association in series, between two distinct adjacent elements for each of the midpoints;

said system being **characterised in that** it also comprises a plurality of inductors (L$_0$-L$_n$) through which said connections are respectively implemented.

2. Management system according to claim 1, also comprising a first connector to connect the first power bar (BP$_1$) to a positive terminal of the element for storing or generating electrical energy situated at a positive end of said association in series, and a second connector to connect the second power bar (BP$_2$) to a negative terminal of the element for storing or generating electrical energy situated at a negative end of said association in series.

3. Management system according to claim 2, also comprising two inductors (L$_0$ ; L$_n$) connected in series to said first and second connectors.

4. Management system according to claim 1, also comprising:

- an inverter arm (B$_0$) connected between said first (BP$_1$) and said second (BP$_2$) power bars, of

which the midpoint ($PM_0$) is connected by the means of a respective inductor ($L_0$) at a positive end of said association in series; and
- an inverter arm ($B_n$) connected between said first ($BP_1$) and said second ($BP_2$) power bars, of which the midpoint ($PM_n$) is connected by the means of a respective inductor ($L_n$) to a negative end of said association in series;
- a capacitor (C) also being connected between said first and second power bars.

5. Management system according to one of the preceding claims, wherein said inductors ($L_0$-$L_n$) all have an equal inductance value and are implemented in the form of windings around respective columns of a magnetic core (NM) of shared yokes, thus forming a single magnetic circuit.

6. Management system according to one of the preceding claims, also comprising a control means (MC) to alternately manage the switches of all or one part of said inverter arms, with a duty factor chosen to determine a mean voltage level of the midpoint of each of said inverter arms equal to a predetermined nominal voltage level.

7. Management system according to one of claims 1 to 5, also comprising a control means (MC) to alternately manage the switches of all or one part of said inverter arms, with a duty factor chosen to determine a current level traversing the midpoint of each of said inverter arms equal to a predetermined nominal current level.

8. Management system of an association in series of elements for storing ($CA_1$-$CA_N$) or generating electrical energy ($PV_1$-$PV_N$), said system comprising:

- a first ($BP_1$) and a second ($BP_2$) power bar;
- a plurality of inverter arms ($B_0$-$B_n$) connected in parallel between said first ($BP_1$) and said second ($BP_2$) power bars.
- a plurality of connectors forming connections to link a midpoint ($PM_i$) of each inverter arm ($B_i$) to said association in series, between two distinct adjacent elements;

in which said N elementary inverter arms ($B_i^1$-$B_i^4$), with N>1, replace each of said inverter arms ($B_i$), each elementary inverter branch ($B_i^1$-$B_i^4$) being in turn formed by two switches ($T_{hi}^1$, $T_{bi}^1$- $T_{hi}^4$, $T_{bi}^4$) connected in series by means of a midpoint ($PM_i^1$-$PM_i^4$) of the elementary inverter arm ($B_i^1$-$B_i^4$), the elementary inverter arms ($B_i^1$-$B_i^4$) being connected by their respective midpoints ($PM_i^1$-$PM_i^4$) and via respective inductors ($L_i^1$-$L_i^4$) to each of said connectors;
the system also comprising a control means to periodically manage said N elementary inverter arms connected to a same conductor with a shift of $1/N^{th}$ cycle.

9. Hierarchical management system of an association in series (S) of modules (M) for storing or generating electrical energy, each module being in turn composed of an association in series (CA) of elements for storing or generating electrical energy, each system comprising:

- a plurality of management systems ($SGO_1$-$SGO_{10}$) according to one of the preceding claims, to ensure the management of respective modules; and
- a management system (SGF) based on converters of flyback type, to ensure the management of the association in series of said modules, considered as indivisible units, said management system (SGF) associating a full-bridge inverter and a coiling of the magnetic coupling to each of said modules.

10. Association in series of elements for electrochemical storing of electrical energy comprising a management system according to one of the preceding claims.

11. Use of a system according to one of claims 6 and 7 or according to one of claims 8 and 9 taken in combination with claims 6 or 7 in order to implement voltage and/or current level balancing of the elements of an electrochemical battery.

12. Use of a system according to one of claims 6 or 7 or one of claims 8 or 9 taken in combination with claim 6 or 7, in order to support current to an association in series of photovoltaic cells or panels.

13. Use of a system according to claim 6 or one of claims 8 and 9 taken in combination with claim 6, in order to detect a photovoltaic cell, or a group of photovoltaic cells, fading or shaded in an association in series of such cells, the arm switches of which the midpoints connected to said cell or cells through inductors being managed in order to impose a known voltage to said midpoints of each of these arms, by means of the current flowing in said inductors.

**FIG.1**

CA$_1$  )3,9V

CA$_2$  )4,3V

CA$_3$  )4V

CA$_4$  )3,8V

16 V

**FIG.2A**

FIG.3A

FIG.3B

FIG.3C

FIG.3D

FIG.4A

FIG.4B

FIG.4C

FIG.4D

FIG.5

FIG.8A

FIG.8B

FIG.6

FIG.7A

FIG.7B

FIG.2B

FIG.2C

FIG.9

FIG.10A

FIG.10B

FIG.10C

FIG.11A

FIG.11B

FIG.11C

27

## FIG.12

FIG.13

**EP 2 559 133 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008115538 A, Hartzog
- WO 2011004081 A
- US 20080135932 A
- FR 1000671
- US 6873134 B

**Littérature non-brevet citée dans la description**

- **N. KUTKUT ; D. DIVAN.** Dynamic equalization techniques for series battery stacks. *18th International Telecommunication Energy Conference,* 1996, 514-521
- **T. SHIMIZU et al.** Generation Control Circuit for Photovoltaic Modules. *IEEE Transactions on Power Electronics,* Mai 2001, vol. 16 (3
- **T. MISHIMA ; T. OHNISHI.** Power Compensation System for Partially Shaded PV Array using Electric Double Layer Capacitors. *28th Annual Conference of the IEEE Industrial Electronics Society (IECON 02),* 05 Novembre 2002, vol. 4, 3262-3267
- **PHILIPPE LETURCQ.** Tenue en tension des semi-conducteurs de puissance. *Techniques de l'ingénieur*

30